# EUROPEAN PATENT APPLICATION

(11) **EP 4 827 208 A1**
(43) Date of publication of application: **21.10.2026**
(21) Application number: 24910570.1
(22) Date of filing: 03.12.2024
(51) Int. Cl.: H04W 72/1268

(54) **DATA TRANSMISSION METHOD AND APPARATUS, AND COMMUNICATION SYSTEM**

(30) Priority: 29.12.2023 CN 202311866704
(71) Applicant: Huawei Technologies Co., Ltd., Shenzhen, Guangdong 518129 (CN)
(72) Inventor: PENG, Wenjie, Shenzhen, Guangdong 518129 (CN); PAN, Xiaodan, Shenzhen, Guangdong 518129 (CN)
(74) Representative: Isarpatent
(86) International application number: PCT/CN2024/136428
(87) International publication number: WO 2025/139638

(57) **Abstract**

A data transmission method and apparatus, and a communication system are provided. The method includes: obtaining a first DRB, where the first DRB is used by a terminal device to send uplink data of a first QoS flow to a first network device; obtaining a second DRB, where the second DRB is used by the terminal device to receive downlink data of the first QoS flow from a second network device; and sending the uplink data of the first QoS flow to the first network device by using the first DRB, and/or receiving the downlink data of the first QoS flow from the second network device by using the second DRB. In this way, end-to-end transmission of the uplink data and the downlink data of the first QoS flow is separated, thereby improving uplink data transmission flexibility, and reducing an uplink data transmission delay.

## Description

This application claims priority to Chinese Patent Application No. 202311866704.2, filed with the China National Intellectual Property Administration on December 29, 2023 and entitled "DATA TRANSMISSION METHOD AND APPARATUS, AND COMMUNICATION SYSTEM", which is incorporated herein by reference in its entirety.

### TECHNICAL FIELD

This application relates to the communication field, and more specifically, to a data transmission method and apparatus, and a communication system.

### BACKGROUND

In mobile communication systems, a terminal device (for example, user equipment (user equipment, UE)) may establish a connection to one or more network devices (for example, base stations), for transmission of uplink data and/or downlink data.

For example, in dual connectivity (dual connectivity, DC) technology, UE is generally allowed to be connected to two base stations at the same time, that is, the UE may perform data transmission with the two base stations. In other words, the two base stations may provide services for the UE. This can effectively improve a rate of the UE. For example, a long term evolution (long term evolution, LTE) base station and a new radio (new radio, NR) base station may provide services for one UE at the same time. In downlink data transmission, a core network sends data to the NR base station, and the data is sent to the UE through an air interface of the NR base station; or a part of the data is sent to the UE through the air interface of the NR base station, and the other part of the data is sent to the UE through an air interface of the LTE base station. In uplink data transmission, the UE sends data to the LTE base station, the data is sent to the NR base station through the air interface of the LTE base station, and then the data is sent to the core network through the air interface of the NR base station. Because the NR base station includes a packet data convergence protocol (Packet Data Convergence Protocol, PDCP) anchor, end-to-end (that is, between the UE and the core network) transmission of uplink data and downlink data needs to be routed via the NR base station. This increases a data transmission delay.

### SUMMARY

This application provides a data transmission method and apparatus, to implement separate transmission of uplink data and downlink data of a first QoS flow, and improve transmission performance.

According to a first aspect, a data transmission method is provided. The method may be performed by a first network device, or may be performed by a chip or a circuit in the first network device. This is not limited in this application. For ease of description, an example in which the method is performed by the first network device is used below for description.

The method includes: sending first configuration information to a terminal device, where the first configuration information is used to configure a first data radio bearer DRB, and the first DRB is used by the first network device to receive uplink data of a first quality of service QoS flow; and sending second configuration information to the terminal device, where the second configuration information is used to configure a second DRB, and the second DRB is used to receive downlink data of the first QoS flow from a second network device.

According to the foregoing solution, the first configuration information is sent, so that the uplink data of the first QoS flow is transmitted by the first network device by using the first DRB, and the second configuration information is sent, so that the downlink data of the first QoS flow is transmitted by the second network device by using the second DRB. This implements separate transmission of the uplink data and the downlink data of the first QoS flow, eliminating the need of transmitting the uplink data of the first QoS flow between the first network device and the second network device. This reduces a transmission delay of the uplink data of the first QoS flow, and improves transmission performance.

In an optional implementation, before sending the second configuration information to the terminal device, the method further includes: receiving the second configuration information from the second network device.

In an optional implementation, before the second configuration information is sent to the terminal device, the first DRB is further used by the first network device to send the downlink data of the first QoS flow.

In other words, in a first case, the first DRB may be established by the first network device before dual connectivity is established. In this case, the first DRB is further used by the first network device to send the downlink data of the first QoS flow to the terminal device, or in other words, the terminal device may further receive the downlink data of the first QoS flow from the first network device by using the first DRB. In other words, before dual connectivity is established, the first DRB is used to transmit the uplink data and the downlink data of the first QoS flow between the first network device and the terminal device, or in other words, transmission of the uplink data and the downlink data of the first QoS flow between the terminal device and a core network element (end-to-end) is completed by the first network device.

In an optional implementation, before receiving the second configuration information from the second network device, the method further includes: sending a first request message to the second network device, where the first request message is used to request the second network device to transmit the downlink data of the first QoS flow for the terminal device, and the first request message includes information about the first QoS flow.

In an optional implementation, before receiving the second configuration information from the second network device, the method further includes: sending a second request message to the second network device, where the second request message is used to request the second network device to transmit the first QoS flow for the terminal device, and the second request message includes information about the first QoS flow.

Based on the foregoing solution, the first network device or the second network device may autonomously determine that the second network device transmits the downlink data of the first QoS flow for the terminal device, and that the first network device transmits the uplink data of the first QoS flow for the terminal device. This implements separate transmission of the uplink data and the downlink data of the first QoS flow, eliminating the need of transmitting the uplink data of the first QoS flow between the first network device and the second network device. This reduces a transmission delay of the uplink data of the first QoS flow, and improves transmission performance.

In an optional implementation, before the second configuration information is sent to the terminal device, the second DRB is used by the first network device to receive the uplink data of the first QoS flow, and is used by the first network device to send the downlink data of the first QoS flow.

In other words, in a second case, the second DRB may be established by the first network device before dual connectivity is established. In this case, the second DRB is further used by the first network device to send the downlink data of the first QoS flow to the terminal device, or in other words, the terminal device may further receive the downlink data of the first QoS flow from the first network device by using the second DRB. In other words, before dual connectivity is established, the second DRB is used to transmit the uplink data and the downlink data of the first QoS flow between the first network device and the terminal device.

In an optional implementation, before receiving the second configuration information from the second network device, the method further includes: sending a third request message to the second network device, where the third request message is used to request the second network device to transmit the downlink data of the first QoS flow for the terminal device, and the third request message includes a packet data convergence protocol PDCP configuration of the second DRB and a mapping relationship between the second DRB and the first QoS flow.

In an optional implementation, before receiving the second configuration information from the second network device, the method further includes: sending a fourth request message to the second network device, where the fourth request message is used to request the second network device to transmit the first QoS flow for the terminal device, and the fourth request message includes a PDCP configuration of the second DRB and a mapping relationship between the second DRB and the first QoS flow.

Based on the foregoing solution, the first network device or the second network device may autonomously determine that the second network device transmits the downlink data of the first QoS flow for the terminal device, and that the first network device transmits the uplink data of the first QoS flow for the terminal device. This implements separate transmission of the uplink data and the downlink data of the first QoS flow, eliminating the need of transmitting the uplink data of the first QoS flow between the first network device and the second network device. This reduces a transmission delay of the uplink data of the first QoS flow, and improves transmission performance.

In an optional implementation, receiving the second configuration information from the second network device includes: receive a response message from the second network device, where the response message indicates that the second network device transmits the downlink data of the first QoS flow for the terminal device, and the response message includes the second configuration information.

In an optional implementation, before the second configuration information is sent to the terminal device, the first configuration information is further used to configure the second DRB, and the second DRB is used by the first network device to send the downlink data of the first QoS flow.

In other words, in a third case, the first DRB and the second DRB may be established by the first network device before dual connectivity is established. In this case, before the second configuration information is sent to the terminal device, the second DRB is used by the first network device to send the downlink data of the first QoS flow to the terminal device. The second DRB is also established by the first network device. In other words, before dual connectivity is established, the first network device may configure both the first DRB and the second DRB by using the first configuration information, and the first network device receives the uplink data of the first QoS flow from the terminal device by using the first DRB, and sends the downlink data of the first QoS flow to the terminal device by using the second DRB.

In an optional implementation, before receiving the second configuration information from the second network device, the method further includes: sending third indication information to the second network device, where the third indication information indicates the second network device to send the downlink data of the first QoS flow to the terminal device by using the second DRB.

Based on the foregoing solution, the first network device may autonomously determine that the second network device transmits the downlink data of the first QoS flow for the terminal device, and that the first network device transmits the uplink data of the first QoS flow for the terminal device. This implements separate transmission of the uplink data and the downlink data of the first QoS flow, eliminating the need of transmitting the uplink data of the first QoS flow between the first network device and the second network device. This reduces a transmission delay of the uplink data of the first QoS flow, and improves transmission performance.

In an optional implementation, before sending the first configuration information to the terminal device, the method further includes: obtaining capability information of the terminal device, where the capability information indicates that the terminal device supports establishing respective DRBs for the uplink data of the first QoS flow and the downlink data of the first QoS flow.

In an optional implementation, the method further includes: receiving first indication information from the second network device, where the first indication information indicates the first network device to establish a radio link control RLC bearer for the second DRB.

In an optional implementation, the method further includes: sending an RLC configuration of the second DRB to the terminal device, where the RLC configuration of the second DRB indicates the RLC bearer for the second DRB.

Based on the foregoing solution, the downlink data of the first QoS flow may be transmitted by using a split bearer. To be specific, the second network device may send the downlink data of the first QoS flow to the first network device, and the first network device sends the downlink data of the first QoS flow to the terminal device through an air interface of the first network device, to improve downlink data transmission efficiency.

In an optional implementation, the method further includes: sending, to the second network device, endpoint information that indicates a third tunnel, where the third tunnel is used by the first network device to receive the downlink data of the first QoS flow from the second network device.

It should be understood that the third tunnel is a tunnel between the first network device and the second network device, and the third tunnel is used to transmit the downlink data of the first QoS flow between the first network device and the second network device. For example, after receiving the downlink data of the first QoS flow from the core network element, the second network device may send the downlink data of the first QoS flow to the first network device through the third tunnel.

For example, the endpoint information indicates endpoint information of the third tunnel on the first network device side, and the endpoint information includes an endpoint identifier of the first network device and/or endpoint address information of the first network device. The second network device may determine information (for example, an endpoint #1) about the third tunnel on the first network device side based on the endpoint information, and then establish the third tunnel with the first network device. Subsequently, the second network device may send the downlink data of the first QoS flow to the endpoint #1.

In an optional implementation, the method further includes: sending second indication information to the second network device, where the second indication information indicates the second network device to establish a second tunnel, and the second tunnel is used by the second network device to receive the downlink data of the first QoS flow from the core network element.

In an optional implementation, the method further includes: sending, to the core network element, endpoint information that indicates the second tunnel.

It should be understood that the second tunnel is a tunnel between the second network device and the core network element, and the second tunnel is used by the second network device to receive the downlink data of the first QoS flow from the core network element. To be specific, for the downlink data of the first QoS flow, the second network device may receive the downlink data of the first QoS flow from the core network element through the second tunnel, and send the downlink data of the first QoS flow to the terminal device by using the second DRB, to complete transmission of the downlink data of the first QoS flow.

For example, the second indication information includes the endpoint information that indicates the second tunnel. The endpoint information indicates endpoint information of the second tunnel on the core network element side, and the endpoint information includes an endpoint identifier of the core network element and/or endpoint address information of the core network element. The second network device may determine information (for example, an endpoint #2) about the second tunnel on the core network element side based on the endpoint information, and then establish the second tunnel with the core network element. Subsequently, the second network device may receive the downlink data of the first QoS flow from the endpoint #2.

In an optional implementation, the method further includes: sending, to the core network element, a message that indicates to retain a first tunnel, where the first tunnel is established by the first network device, and the first tunnel is used by the first network device to send the uplink data of the first QoS flow to the core network element.

It should be understood that retaining the first tunnel may be understood as: indicating the core network element to retain endpoint information of the first tunnel on the first network device side, or indicating the core network element not to delete the first tunnel, that is, the first tunnel is still used to transmit the uplink data of the first QoS flow between the core network element and the first network device. The endpoint information includes the endpoint identifier of the first network device and/or the endpoint address information of the first network device. Based on this, the uplink data of the first QoS flow may be transmitted between the core network element and the first network device through the first tunnel, and/or the downlink data of the first QoS flow may be transmitted between the core network element and the second network device through the second tunnel.

According to a second aspect, a data transmission method is provided. The method may be performed by a second network device, or may be performed by a chip or a circuit in the second network device. This is not limited in this application. For ease of description, an example in which the method is performed by the second network device is used below for description.

The method includes: sending second configuration information to a first network device, where the second configuration information is used to configure a second data radio bearer DRB, and the second DRB is used by the second network device to send downlink data of a first quality of service QoS flow to a terminal device.

In an optional implementation, uplink data of the first QoS flow is carried on a first DRB, and the first DRB is configured by using first configuration information.

In an optional implementation, before the second configuration information is sent to the first network device, the first DRB is further used to carry the downlink data of the first QoS flow.

In an optional implementation, before sending the second configuration information to the first network device, the method further includes: receiving a first request message from the first network device, where the first request message is used to request the second network device to transmit the downlink data of the first QoS flow for the terminal device, and the first request message includes information about the first QoS flow.

In an optional implementation, before sending the second configuration information to the first network device, the method further includes: receiving a second request message from the first network device, where the second request message is used to request the second network device to transmit the first QoS flow for the terminal device, and the second request message includes information about the first QoS flow.

In an optional implementation, before the second configuration information is sent to the first network device, the second DRB is used by the first network device to receive the uplink data of the first QoS flow, and is used by the first network device to send the downlink data of the first QoS flow.

In an optional implementation, before sending the second configuration information to the first network device, the method further includes: receiving a third request message from the first network device, where the third request message is used to request the second network device to transmit the downlink data of the first QoS flow for the terminal device, and the third request message includes a PDCP configuration of the second DRB and a mapping relationship between the second DRB and the first QoS flow.

In an optional implementation, before sending the second configuration information to the first network device, the method further includes: receiving a fourth request message from the first network device, where the fourth request message is used to request the second network device to transmit the first QoS flow for the terminal device, and the fourth request message includes a PDCP configuration of the second DRB and a mapping relationship between the second DRB and the first QoS flow.

In an optional implementation, sending the second configuration information to the first network device includes: sending a response message to the first network device, where the response message indicates that the second network device transmits the downlink data of the first QoS flow for the terminal device, and the response message includes the second configuration information.

In an optional implementation, before the second configuration information is sent to the first network device, the second DRB is used by the first network device to send the downlink data of the first QoS flow.

In an optional implementation, the method further includes: receiving third indication information from the first network device, where the third indication information indicates the second network device to send the downlink data of the first QoS flow to the terminal device by using the second DRB.

In an optional implementation, the method further includes: receiving the downlink data of the first QoS flow from a core network element through a second tunnel; and sending the downlink data of the first QoS flow to the terminal device by using the second DRB.

In an optional implementation, the method further includes: establishing the second tunnel, where the second tunnel is used by the second network device to receive the downlink data of the first QoS flow from the core network element.

In an optional implementation, the method further includes: sending first indication information to the second network device, where the first indication information indicates the first network device to establish a radio link control RLC bearer for the second DRB.

In an optional implementation, the method further includes: receiving, from the first network device, endpoint information that indicates a third tunnel, where the third tunnel is used by the first network device to receive the downlink data of the first QoS flow from the second network device.

In an optional implementation, before establishing the second tunnel, the method further includes:

receiving second indication information from the first network device, where the second indication information indicates the second network device to establish the second tunnel.

For beneficial effects of the second aspect and some optional implementations of the second aspect, correspondingly refer to the related descriptions in the first aspect. Details are not described herein again.

According to a third aspect, a data transmission method is provided. The method may be performed by a terminal device, or may be performed by a chip or a circuit in the terminal device. This is not limited in this application. For ease of description, an example in which the method is performed by the terminal device is used below for description.

The method includes: obtaining a first data radio bearer DRB, where the first DRB is used by the terminal device to send uplink data of a first quality of service QoS flow to a first network device; obtaining a second DRB, where the second DRB is used by the terminal device to receive downlink data of the first QoS flow from a second network device; and sending the uplink data of the first QoS flow to the first network device by using the first DRB, and/or receiving the downlink data of the first QoS flow from the second network device by using the second DRB.

In an optional implementation, the first DRB is from the first network device.

In an optional implementation, before the second DRB is obtained, the first DRB is further used by the terminal device to receive the downlink data of the first QoS flow from the first network device.

In an optional implementation, the second DRB is from the first network device, or the second DRB is from the second network device.

In an optional implementation, obtaining the first DRB includes: receiving first configuration information from the first network device, where the first configuration information is used to configure the first DRB.

In an optional implementation, obtaining the second DRB includes: receiving second configuration information from the first network device, where the second configuration information is used to configure the second DRB.

In an optional implementation, the method further includes: obtaining a radio link control RLC configuration of the second DRB, where the RLC configuration of the second DRB is used to configure an RLC bearer for the second DRB; and receiving the downlink data of the first QoS flow from the first network device by using the RLC bearer for the second DRB.

For beneficial effects of the third aspect and some optional implementations of the third aspect, correspondingly refer to the related descriptions in the first aspect. Details are not described herein again.

According to a fourth aspect, a data transmission method is provided. The method may be performed by a core network element, or may be performed by a chip or a circuit in the core network element. This is not limited in this application. For ease of description, an example in which the method is performed by the core network element is used below for description.

The method includes: receiving endpoint information that indicates a second tunnel, where the second tunnel is used by the core network element to send downlink data of a first quality of service QoS flow to a second network device, where uplink data of the first QoS flow is received by the core network element from a first network device through a first tunnel.

In an optional implementation, before the endpoint information that indicates the second tunnel is received, the downlink data of the first QoS flow is sent by the core network element to the first network device through the first tunnel.

In an optional implementation, the method further includes: receiving a message that indicates to retain the first tunnel.

For beneficial effects of the fourth aspect and some optional implementations of the fourth aspect, correspondingly refer to the related descriptions in the first aspect. Details are not described herein again.

According to a fifth aspect, a data transmission apparatus is provided. The data transmission apparatus may be applied to the first network device in the first aspect, and may include a one-to-one corresponding module or unit for performing the method/operation/step/action described in the first aspect. The module or unit may be implemented by a hardware circuit, software, or a combination of a hardware circuit and software.

In an optional implementation, the apparatus includes: a transceiver unit, configured to send first configuration information to a terminal device, where the first configuration information is used to configure a first DRB, the first DRB is used by the first network device to receive uplink data of a first QoS flow, and is used by the first network device to send downlink data of the first QoS flow. The transceiver unit is further configured to send second configuration information to the terminal device, where the second configuration information is used to configure a second DRB, and the second DRB is used to receive the downlink data of the first QoS flow from a second network device.

The transceiver unit may perform receiving and sending processing in the first aspect and the possible implementations of the first aspect. Optionally, the apparatus further includes a processing unit. The processing unit may perform processing other than receiving and sending processing in the first aspect and the possible implementations of the first aspect.

According to a sixth aspect, a data transmission apparatus is provided. The data transmission apparatus may be applied to the second network device in the second aspect, and may include a one-to-one corresponding module or unit for performing the method/operation/step/action described in the second aspect. The module or unit may be implemented by a hardware circuit, software, or a combination of a hardware circuit and software.

In an optional implementation, the apparatus includes a transceiver unit, configured to send second configuration information to a first network device, where the second configuration information is used to configure a second data radio bearer DRB, and the second DRB is used by the second network device to send downlink data of a first quality of service QoS flow to a terminal device.

The transceiver unit may perform receiving and sending processing in the second aspect and the possible implementations of the second aspect. Optionally, the apparatus further includes a processing unit. The processing unit may perform processing other than receiving and sending processing in the second aspect and the possible implementations of the second aspect.

According to a seventh aspect, a data transmission apparatus is provided. The data transmission apparatus may be applied to the terminal device in the third aspect, and may include a one-to-one corresponding module or unit for performing the method/operation/step/action described in the third aspect. The module or unit may be implemented by a hardware circuit, software, or a combination of a hardware circuit and software.

In some optional implementations, the apparatus includes: a transceiver unit, configured to obtain a first DRB, where the first DRB is used by the terminal device to send uplink data of a first QoS flow to a first network device. The transceiver unit is further configured to obtain a second DRB, where the second DRB is used by the terminal device to receive downlink data of the first QoS flow from a second network device. The transceiver unit is further configured to: send the uplink data of the first QoS flow to the first network device by using the first DRB, and/or receive the downlink data of the first QoS flow from the second network device by using the second DRB.

The transceiver unit may perform receiving and sending processing in the third aspect and the possible implementations of the third aspect. Optionally, the apparatus further includes a processing unit. The processing unit may perform processing other than receiving and sending processing in the third aspect and the possible implementations of the third aspect.

According to an eighth aspect, a data transmission apparatus is provided. The data transmission apparatus may be applied to the core network element in the fourth aspect, and may include a one-to-one corresponding module or unit for performing the method/operation/step/action described in the fourth aspect. The module or unit may be implemented by a hardware circuit, software, or a combination of a hardware circuit and software.

In some optional implementations, the apparatus includes a transceiver unit, configured to receive endpoint information that indicates a second tunnel, where the second tunnel is used by the core network element to send downlink data of a first QoS flow to a second network device, and uplink data of the first QoS flow is received by the core network element from a first network device through a first tunnel.

The transceiver unit may perform receiving and sending processing in the fourth aspect and the possible implementations of the fourth aspect. Optionally, the apparatus further includes a processing unit. The processing unit may perform processing other than receiving and sending processing in the fourth aspect and the possible implementations of the fourth aspect.

According to a ninth aspect, a data transmission apparatus is provided, including at least one processor. The at least one processor is configured to execute a computer program or instructions, and/or use a logic circuit, so that the data transmission apparatus performs the method in any one of the first aspect to the fourth aspect or any one of the possible implementations of these aspects.

In an optional implementation, the at least one processor is coupled to at least one memory, and the at least one memory stores the computer program or instructions. Optionally, the data transmission apparatus further includes the at least one memory. Optionally, the at least one processor and the at least one memory are integrated together.

According to a tenth aspect, a chip is provided, including a processor and/or a communication interface. The communication interface is configured to receive to-be-processed information and/or data, and send the to-be-processed information and/or data to the processor. The processor is configured to process the to-be-processed information and/or data, so that a data transmission apparatus in which a chip is installed performs the method in any one of the first aspect to the fourth aspect or any one of the possible implementations of these aspects.

According to an eleventh aspect, a computer-readable storage medium is provided. The computer-readable storage medium stores computer instructions. When the computer instructions are run on a computer, the method in any one of the first aspect to the fourth aspect or any one of the possible implementations of these aspects is implemented.

According to a twelfth aspect, a computer program product is provided. The computer program product includes computer program code or instructions. When the computer program code or the instructions are run on a computer, the method in any one of the first aspect to the fourth aspect or any one of the possible implementations of these aspects is implemented.

According to a thirteenth aspect, a communication system is provided, including the data transmission apparatus according to any one or more of the fifth aspect, the sixth aspect, and the eighth aspect.

Optionally, the communication system may further include the data transmission apparatus in the seventh aspect.

For technical effects of the technical solutions in the fifth aspect to the thirteenth aspect, refer to the descriptions of corresponding technical effects in the first aspect to the fourth aspect. Details are not described again.

### BRIEF DESCRIPTION OF DRAWINGS

FIG. 1 to FIG. 3 are diagrams of network architectures applicable to an embodiment of this application;
FIG. 4 is an interaction flowchart of a data transmission method according to an embodiment of this application;
FIG. 5A and FIG. 5B are diagrams of a first tunnel and a second tunnel according to an embodiment of this application;
FIG. 6A to FIG. 8B are diagrams of protocol stacks according to an embodiment of this application;
FIG. 9 is a diagram of a data transmission apparatus according to an embodiment of this application; and
FIG. 10 is a diagram of another data transmission apparatus according to an embodiment of this application.

### DESCRIPTION OF EMBODIMENTS

The following describes technical solutions of embodiments in this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

In embodiments of this application, a terminal device may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing voice/data connectivity to a user), for example, a handheld device or a vehicle-mounted device having a wireless connection function. The terminal device in embodiments of this application may be a mobile phone, a tablet computer, a computer with a wireless transceiver function, a train, an airplane, a mobile Internet device (mobile internet device, MID), a virtual reality (virtual reality, VR) terminal, an augmented reality (augmented reality, AR) terminal, a wireless terminal in industrial control (for example, a robot), a wireless terminal in the Internet of vehicles, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, or another processing device connected to a wireless modem, a wearable device, or the like. The terminal device may be further applied to scenarios such as self driving, telemedicine, a smart grid, transportation security, a smart city, and a smart home. The terminal device may alternatively be a terminal device in the IoT system. IoT is an important part in future development of the information technology. A main technical feature of the IoT is to connect things to a network by using a communication technology, to implement an intelligent network for human-machine interconnection and thing-thing interconnection. In embodiments of this application, the IoT technology can implement massive connections, deep coverage, and terminal power saving by using, for example, a narrowband (narrowband, NB) technology. In embodiments of this application, an apparatus configured to implement a function of the terminal device may be a terminal device, or may be an apparatus that can support the terminal device in implementing the function, for example, a chip system or a combined component or part that can implement the function of the terminal device. The apparatus may be installed in the terminal device. A specific technology and a specific device form used by the terminal device are not limited in embodiments of this application.

In embodiments of this application, a network device may be any device that has a wireless transceiver function and that is configured to communicate with the terminal device. The network device may also be referred to as an access network device or a radio access network device. For example, the network device may be a base station. In embodiments of this application, the network device may be a radio access network (radio access network, RAN) node (or a RAN device or a RAN entity) that connects the terminal device to a wireless network. The RAN may be a cellular system related to 3rd generation partnership project (3rd generation partnership project, 3GPP), for example, a 5G mobile communication system or a future-oriented evolved system (for example, a 6G mobile communication system). The RAN may alternatively be an open radio access network (open RAN, O-RAN or ORAN), a cloud radio access network (cloud radio access network, CRAN), or a wireless fidelity (wireless fidelity, Wi-Fi) system. The RAN may alternatively be a communication system that integrates two or more of the foregoing systems. The network device may cover the following names in a broad sense, or may be replaced with the following names, for example: a NodeB (NodeB), an evolved NodeB (evolved NodeB, eNB), a next generation NodeB (next generation NodeB, gNB), or a base station device in a future evolved communication system; may be a server, a wearable device, a vehicle-mounted device, a wireless relay node, a wireless backhaul node, a transmission point (transmission point, TP), a transmission reception point (transmission reception point, TRP), or the like; may be one antenna panel or one group of antenna panels (including a plurality of antenna panels) of a base station; or may be a network node, for example, a baseband unit (Baseband unit, BBU), a central unit (central unit, CU), a distributed unit (distributed unit, DU), or a radio unit (radio unit, RU) included in a base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between a DU and an RU in an O-RAN system, or the like. This is not limited. The network device may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that performs functions of a network device in D2D, V2X, and M2M communication, a network side device in a 6G network, a device that performs functions of a network device in a future communication system, or the like. The network device may support networks using a same access technology or different access technologies. In embodiments of this application, an apparatus configured to implement a function of the network device may be a network device, or may be an apparatus that can support the network device in implementing the function, for example, a chip system or a combined component or part that can implement the function of the network device. The apparatus may be installed in the network device. A specific technology and a specific device form used by the network device are not limited in embodiments of this application.

The network device and the terminal device may be deployed on land, including an indoor or outdoor device, a handheld device, or a vehicle-mounted device; may be deployed on water; or may be deployed on an airplane, a balloon, and a satellite in the air. Scenarios in which the network device and the terminal device are located are not limited in embodiments of this application. The network device and the terminal device may be fixed, or may be mobile.

In some deployments, the network device in embodiments of this application may be a CU and/or a DU. The network device may further include an active antenna unit (active antenna unit, AAU). For example, the CU and the DU may be divided based on a protocol layer of a wireless network. The CU implements some functions of the gNB, and the DU implements some functions of the gNB. For example, the CU is responsible for processing a non-real-time protocol and service, and implements functions of a radio resource control (radio resource control, RRC) layer, a service data adaptation protocol (service data adaptation protocol, SDAP) layer, and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a central unit-control plane (central unit-control plane, CU-CP) and a central unit-user plane (central unit-user plane, CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes a service data adaptation protocol (service data adaptation protocol, SDAP) layer and a PDCP-U layer. The SDAP layer is mainly responsible for processing data in the core network and mapping a flow (flow) to a bearer. The PDCP-U layer is mainly responsible for at least one of functions of encryption and decryption, integrity protection, header compression, serial number maintenance, data transmission, and the like on a data plane. For example, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In different systems, the CU (including the CU-CP or the CU-UP), the DU, or the RU may have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It may be understood that the foregoing division of the CU and the DU into protocol layers and division of the CU-CP and the CU-UP into protocol layers are merely examples, and there may be another division manner. This is not limited. The network device in embodiments of this application may be a device including the CU or the DU, a device including the CU and the DU, or a device including the CU-control plane node (CU-CP node), the CU-user plane node (CU-UP node), and the DU node.

In embodiments of this application, the core network device may be a device in the core network (core network, CN) that provides service support for the terminal device. The core network device may include one or more core network elements. A 5G core network is used as an example herein. The 5G core network includes an access and mobility management function (access and mobility management function, AMF) network element responsible for services of mobility management, access management and the like, a session management function (session management function, SMF) network element responsible for session management, a user plane function (user plane function, UPF) network element responsible for user-plane data packet routing and forwarding and quality of service (quality of service, QoS) control, a policy control function (policy control function, PCF) network element, and the like. The core network elements may operate independently, or may be combined to implement some control functions. For example, the AMF, the SMF, and the PCF may be combined as one core network device.

It should be understood that, the foregoing names are defined only for ease of distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

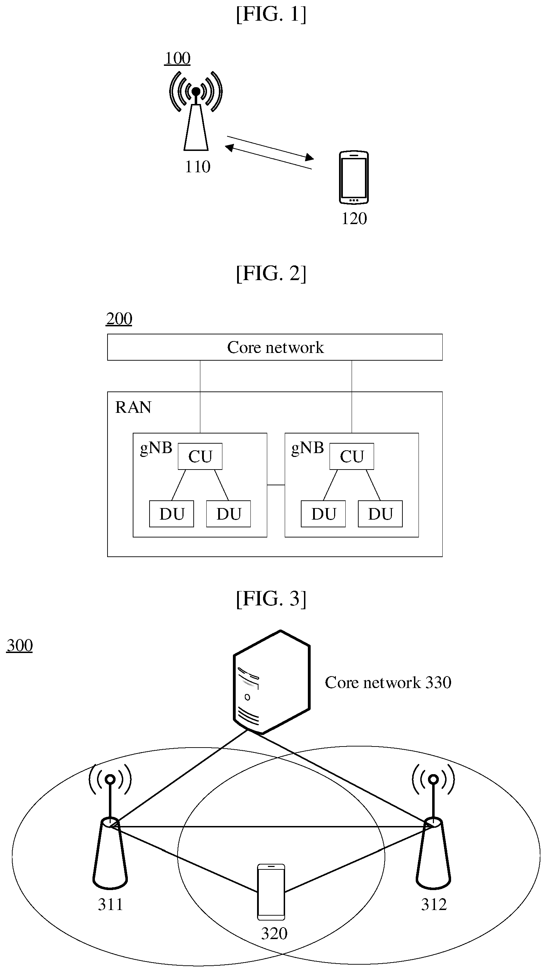

For ease of understanding embodiments of this application, a communication system applicable to embodiments of this application is described in detail below with reference to FIG. 1 to FIG. 3.

FIG. 1 is a diagram of a communication system 100 applicable to an embodiment of this application. As shown in FIG. 1, the communication system 100 includes a network device 110 and a terminal device 120. In the communication system, the terminal device 120 may send uplink data/an uplink signal/uplink information to the network device 110, and the network device 110 may send downlink data/a downlink signal/downlink information to the terminal device 120. Optionally, a data transmission method provided in embodiments of this application may further relate to a device or a transmission node that is not shown in FIG. 1. This is not limited in this embodiment of this application.

FIG. 2 is a diagram of a communication system 200 applicable to an embodiment of this application. As shown in FIG. 2, a RAN may be a CU-DU separated architecture. It may be understood that the RAN is divided into a CU and a DU from a perspective of a logical function. The CU and the DU may be physically separated or deployed together. A plurality of DUs may share one CU. In a RAN sharing scenario, one DU may be connected to a plurality of CUs (not shown in FIG. 2). The CU and the DU may be connected through an interface, for example, an F1 interface. In the communication system, a core network may exchange information with a gNB. For example, the core network may exchange information with the CU. In an implementation, the CU may have one or more functions of the core network. One or more CUs may be disposed together or separately. A core network device in the core network and a RAN node in the RAN may be different physical devices, or may be a same physical device that integrates a logical function of the core network and a logical function of the RAN.

In a wireless network, one terminal device may communicate with a plurality of network devices (for example, base stations). This is dual connectivity (dual connectivity, DC), also referred to as multi-radio dual connectivity (multi-radio dual connectivity, MR-DC). The plurality of base stations may be base stations that belong to a same radio access technology (radio access technology, RAT) (for example, all are 6G base stations or 5G base stations), or may be base stations that belong to different RATs (for example, one is a 6th-generation 6G base station, and another is a 5th-generation 5G base station).

FIG. 3 is a diagram of a communication system 300 applicable to an embodiment of this application. Refer to FIG. 3. An example in which a terminal device is UE and a network device is a base station is used. UE 320 may communicate with a base station 311 and a base station 312 by using a DC technology. The base station 311 and the base station 312 both access a core network 330. There may be a direct communication interface or an indirect communication interface between the base station 311 and the base station 312. The core network 330 may be connected to the base station 311 and the base station 312 in a wired or wireless manner. The core network 330 may be a 6G core network, a 5G core network, or an evolved 5G core network.

A network side may provide a communication service for UE by using resources of a plurality of base stations, to provide high-rate transmission for the UE. In a DC scenario, for specific UE, a base station that exchanges control plane signaling with a core network is referred to as a master node (master node, MN), and another base station is referred to as a secondary node (secondary node, SN). The MN may also be referred to as a master base station (or a master station), and the SN may also be referred to as a secondary base station (or a secondary station). The base stations have different RLC entities and different MAC entities. For ease of description, in this embodiment of this application, an example in which a first network device is a master base station MN and a second network device is a secondary base station SN is used for description.

Optionally, the communication systems in FIG. 1 to FIG. 3 may further include an application function (application function, AF) network element. The AF network element is a control plane network function provided by an operator network, and is configured to provide application layer information. It should be understood that FIG. 1 to FIG. 3 are merely examples provided for ease of understanding. The communication system shown in the figures may further include another network device or another terminal device, which is not shown.

It should be noted that, a specific structure of an execution body of the method provided in embodiments of this application is not specifically limited in embodiments of this application, provided that a program that records code for the method provided in embodiments of this application can be run to perform communication according to the method provided in embodiments of this application. For example, the execution body of the method provided in embodiments of this application may be a first apparatus, or may be a functional module that is in the first apparatus and that can invoke and execute the program, may be a one-to-one corresponding module or a unit (for example, a chip, a chip system, or a circuit) in the first apparatus for performing the method, operation, step, or action, or may be another apparatus that can be used in combination with the first apparatus.

For ease of understanding embodiments of this application, terms or technologies in this application are described first.

### 1. Dual connectivity (dual connectivity, DC)

In dual connectivity, UE is allowed to connect to two base stations at the same time, that is, the two base stations provide services for the UE, and the UE can perform data transmission with the two base stations, so that a rate and reliability of the UE can be effectively improved. For example, in the network architecture 300 shown in FIG. 3, the UE 320 may exchange information with the base station 311 and the secondary base station 312. In a dual connectivity technology, a base station that carries a control plane connection is a master base station (also referred to as a master station, MN), and the other base station is a secondary base station (also referred to as a secondary station, SN).

### 2. Radio bearer

A radio bearer (radio bearer, RB) is a general term for protocol entities and configurations allocated by a base station to UE at different layers, including a series of resources allocated by a PDCP protocol entity, an RLC protocol entity, a MAC protocol entity, and a PHY protocol entity, and the like. The RB is a channel (including PHY, MAC, RLC, and PDCP) that connects the base station and the UE over a radio interface. Any data transmitted over the radio interface needs to be routed via the RB. The RB includes a signaling bearer (signaling radio bearer, SRB) and a data bearer (data radio bearer, DRB).

### 3. Split bearer

A split bearer refers to a bearer that uses both an air interface of a master base station and an air interface of a secondary base station to transmit data, so that a data transmission rate can be greatly improved.

For example, a user plane data anchor (for example, a PDCP anchor) is in the secondary base station. For downlink transmission, after downlink data is transmitted from a core network to the secondary base station, the secondary base station may send the downlink data to UE through the air interface of the secondary base station. Alternatively, the secondary base station may split the downlink data into two parts: one part is sent to the UE through the air interface of the secondary base station, and the other part is sent to the master base station through an inter-base station interface, and then transmitted to the UE by the master base station through the air interface of the master base station. For uplink transmission, the UE sends uplink data to the master base station through the air interface of the master base station. After receiving the uplink data, the master base station needs to forward the uplink data to the secondary base station through the interface between the master and secondary base stations, and then the secondary base station sends the uplink data to the core network, thereby implementing an effect of separation of the uplink data and the downlink data.

It should be noted that the PDCP anchor may be in the master station or the secondary station. The foregoing is merely an example provided for ease of understanding. In a dual connectivity scenario, a base station in which the PDCP anchor is located is usually referred to as a PDCP anchor station, and the other base station is referred to as a non-PDCP anchor station. Therefore, for uplink transmission, after receiving the uplink data of the UE, the non-PDCP anchor station needs to forward the uplink data to the PDCP anchor station, and then the PDCP anchor station delivers the uplink data to the core network. In other words, both uplink data and downlink data needs to be routed via the PDCP anchor station, which causes uplink data transmission to incur an inter-station interface delay, and thus increases an uplink data transmission delay.

To resolve the foregoing problem, this application provides a data transmission method and a data transmission apparatus, to separate uplink data and downlink data between a terminal device and a core network, and reduce an uplink data transmission delay. It should be noted that the technical solutions of this application may be applied to the foregoing dual connectivity scenario, or may be applied to another scenario in which the technical problem exists. This is not limited in this application. For ease of description, the dual connectivity scenario is used as an example for description in embodiments of this application.

The data transmission method provided in embodiments of this application is described in detail below with reference to the accompanying drawings. Embodiments provided in this application are applicable to a communication scenario in which a transmitter device communicates with a receiver device, for example, may be applied in the communication systems shown in FIG. 1 to FIG. 3.

In embodiments of this application, before dual connectivity is established, a terminal device establishes a connection to a first network device for transmission of uplink data and downlink data. The first network device establishes a DRB #1 and a tunnel #1. The DRB #1 is used to transmit uplink data of a first QoS flow and downlink data of the first QoS flow between the terminal device and the first network device. The tunnel #1 is used to transmit the uplink data of the first QoS flow and the downlink data of the first QoS flow between the first network device and a core network element. In the technical solutions of this application, the uplink data of the first QoS flow is transmitted by the first network device from the terminal device to the core network element by using the first DRB and the first tunnel, and the downlink data of the first QoS flow is transmitted by a second network device from the core network element to the terminal device by using a second tunnel and a second DRB. In this way, transmission of uplink data and downlink data of the first QoS flow is separated, thereby reducing a transmission delay of the uplink data and improving transmission performance.

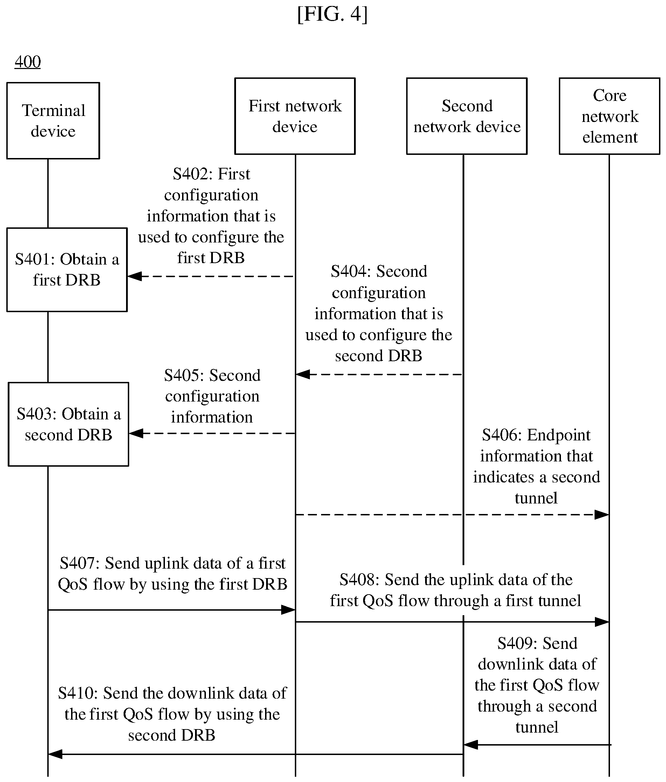

FIG. 4 is a flowchart of a data transmission method 400 according to an embodiment of this application. As shown in FIG. 4, the method procedure may be performed by a first network device, a second network device, a terminal device, and a core network element, or may be performed by a module and/or a component (for example, a chip or an integrated circuit) that have a corresponding function and that are installed in the first network device, the second network device, the terminal device, and the core network element. This is not limited in this application. For ease of description, an example in which the first network device, the second network device, the terminal device, and the core network element are execution bodies is used for description. The method includes the following plurality of steps.

S401: The terminal device obtains a first DRB.

The first DRB is used by the terminal device to send uplink data of a first QoS flow to the first network device, or in other words, the first DRB is used by the first network device to receive the uplink data of the first QoS flow from the terminal device.

Optionally, in an implementation, that the terminal device obtains the first DRB includes: The terminal device receives the first DRB from the first network device, that is, the method includes the following step S402.

S402: The first network device sends first configuration information to the terminal device. Correspondingly, the terminal device receives the first configuration information from the first network device.

The first configuration information is used to configure the first DRB. For example, the first configuration information may be RRC configuration information, or may be other configuration information. This is not limited in this application.

Optionally, before step S402 is performed, that the first network device obtains the first configuration information includes: The first network device generates the first configuration information.

S403: The terminal device obtains a second DRB.

The second DRB is used by the terminal device to receive downlink data of the first QoS flow from the second network device, or in other words, the second DRB is used by the second network device to send the downlink data of the first QoS flow to the terminal device.

Optionally, in an implementation, that the terminal device obtains the second DRB includes: The terminal device receives the second DRB from the second network device. For example, the terminal device may directly receive the second DRB from the second network device, or the terminal device receives the second DRB from the second network device via the first network device. In other words, the following steps S404 and S405 are included.

S404: The second network device sends second configuration information to the first network device. Correspondingly, the first network device receives the second configuration information from the second network device.

The second configuration information is used to configure the second DRB. For example, the second configuration information may be RRC configuration information, or may be other configuration information. This is not limited in this application.

Optionally, before step S404 is performed, that the second network device obtains the second configuration information includes: The second network device generates the second configuration information.

Optionally, in an implementation, the first network device or the second network device may include a CU and/or a DU, or the first network device or the second network device may include an O-CU and/or an O-DU in an ORAN. For example, the first network device and the second network device include the CU and the DU. For example, that the second network device obtains the second configuration information may include: A CU in the second network device generates the second configuration information and sends the second configuration information to a DU in the second network device. For example, that the second network device sends the second configuration information to the first network device may include: the DU in the second network device sends the second configuration information to a DU in the first network device. Further, optionally, the DU in the first network device may send the second configuration information to a CU in the first network device.

S405: The first network device sends the second configuration information to the terminal device. Correspondingly, the terminal device receives the second configuration information from the first network device.

Optionally, in an implementation, the first network device may include a CU and/or a DU, or the first network device may include an O-CU and/or an O-DU in the ORAN. For example, the first network device includes the CU and the DU. For example, after receiving the second configuration information from the DU in the first network device, the CU in the first network device may send the second configuration information to the terminal device.

The following describes, by using examples, bearer types of the first DRB and the second DRB before and after dual connectivity is established.

In a first case, the first DRB may be established by the first network device before dual connectivity is established. In this case, the first DRB is further used by the first network device to send the downlink data of the first QoS flow to the terminal device, or in other words, the terminal device may further receive the downlink data of the first QoS flow from the first network device by using the first DRB. In other words, before dual connectivity is established, the first DRB is used to transmit the uplink data and the downlink data of the first QoS flow between the first network device and the terminal device, or in other words, transmission of the uplink data and the downlink data of the first QoS flow between the terminal device and the core network element (end-to-end) is completed by the first network device.

In this case, the first DRB established by the first network device may be retained as a UL DRB in the first network device, and the second network device establishes the second DRB as a DL DRB. The following steps may be considered as descriptions of negotiation, after dual connectivity is established, between the first network device and the second network device for transmission, by the second network device, of the downlink data of the first QoS flow for the terminal device.

For example, the first configuration information includes a configuration of the first DRB. For example, the configuration of the first DRB includes a mapping relationship between the first QoS flow and the first DRB. The mapping relationship between the first QoS flow and the first DRB includes the first DRB being used to carry the uplink data of the first QoS flow. For example, the second configuration information includes a configuration of the second DRB. For example, the configuration of the second DRB includes a PDCP configuration of the second DRB and/or an RLC configuration of the second DRB. The PDCP configuration of the second DRB indicates a PDCP bearer for the second DRB. The RLC configuration of the second DRB indicates an RLC bearer for the second DRB.

Optionally, before performing step S404, the second network device may negotiate with the first network device, for example, the first network device determines or the second network device autonomously determines, that the second network device transmits the downlink data of the first QoS flow for the terminal device. Then the second network device establishes the second DRB.

In a first implementation, the first network device sends a first request message to the second network device. The first request message is used to request the second network device to transmit the downlink data of the first QoS flow for the terminal device, or in other words, the first request message is used to request the second network device to establish the second DRB for the downlink data of the first QoS flow. Correspondingly, after receiving the first request message, the second network device determines to transmit the downlink data of the first QoS flow for the terminal device, and then establishes the second DRB. This includes configuring a PDCP entity of the second DRB.

For example, the first request message includes information about the first QoS flow. For example, the information about the first QoS flow includes one or more of the following:
(1) a QoS parameter of the first QoS flow, for example, a bit rate required in the QoS parameter;
(2) the mapping relationship between the first QoS flow and the first DRB; and
(3) indication information that indicates the second network device to transmit the downlink data of the first QoS flow for the terminal device.

Optionally, the first request message includes an identifier of a DRB that is allowed to be used by the second network device, for example, a second DRB ID.

Optionally, in response to the received first request message, the second network device sends a first response message to the first network device, where the first response message includes the second configuration information. Optionally, the first response message may indicate a result of establishing the second DRB by the first network device, for example, an establishment success or an establishment failure. It should be understood that the technical solutions of this application are performed based on successful establishment of the second DRB, that is, the second network device supports transmitting the downlink data of the first QoS flow for the terminal device. Optionally, if the second DRB fails to be established, the first response message may carry a failure cause value, which indicates that the second network device is overloaded, or the like.

Optionally, in an implementation, the first network device or the second network device may include a CU and/or a DU, or the first network device or the second network device may include an O-CU and/or an O-DU in the ORAN. For example, the first network device includes a CU, and the second network device includes a DU. In this case, the CU in the first network device establishes the first DRB, and the CU in the first network device sends the first request message to the DU in the second network device. Correspondingly, the DU in the second network device establishes the second DRB, and the DU in the second network device sends the first response message to the CU in the first network device.

It should be noted that in this implementation, the first network device autonomously determines to retain the first DRB in the first network device, and determines that the second network device establishes the second DRB and allocates the configuration of the second DRB to the terminal device, so that the uplink data and the downlink data of the first QoS flow are respectively carried on the first DRB and the second DRB. For example, the uplink data of the first QoS flow is directly sent by the terminal device to a core network via the first network device, and the downlink data of the first QoS flow is sent by the core network device to the terminal device via the second network device, thereby implementing separation of the uplink data and the downlink data.

In a second implementation, the first network device sends a second request message to the second network device, where the second request message is used to request the second network device to transmit the first QoS flow for the terminal device. Correspondingly, after receiving the second request message, the second network device may autonomously determine to establish the second DRB for transmission of the downlink data of the first QoS flow, that is, autonomously determine to transmit the downlink data of the first QoS flow for the terminal device and then establish the second DRB. This includes configuring a PDCP entity of the second DRB.

The second request message includes information about the first QoS flow. For example, the information about the first QoS flow includes one or more of the following:
(1) a QoS parameter of the first QoS flow, for example, a bit rate required in the QoS parameter;
(2) a mapping relationship between the first QoS flow and the first DRB;
(3) a configuration of the first DRB, for example, a PDCP configuration of the first DRB and/or an RLC configuration of the first DRB; and
(4) indication information that indicates the second network device to transmit the downlink data of the first QoS flow for the terminal device.

For example, the second network device may determine, based on the configuration of the first DRB carried in the information about the first QoS flow, an uplink bit rate provided by the first network device for the first QoS flow, to make a decision. For example, when the uplink bit rate provided by the first network device for the first QoS flow is greater than or equal to the bit rate required in the QoS parameter, the second network device may determine that the downlink data of the first QoS flow can be transmitted for the terminal device. This indicates that the first network device needs to transmit the uplink data of the first QoS flow, that is, the first network device transmits the uplink data of the first QoS flow for the terminal device, thereby implementing separate transmission of the uplink data and the downlink data of the first QoS flow.

Optionally, in response to the received second request message, the second network device may send a second response message to the first network device. The second response message indicates that the second network device supports transmitting the downlink data of the first QoS flow for the terminal device, and the second response message includes the second configuration information. In other words, the first network device may determine, based on the second response message, that the second network device supports transmitting the downlink data of the first QoS flow for the terminal device, and optionally, may further determine that the downlink data of the first QoS flow is carried on the second DRB. Therefore, the first network device needs to transmit the uplink data of the first QoS flow for the terminal device, that is, the first network device retains the first DRB, and the uplink data of the first QoS flow is carried on the first DRB. Optionally, if the second network device does not support transmission of the first QoS flow for the terminal device, or the second network device fails to establish the second DRB, the second network device may send a failure cause value to the first network device, which indicates that the second network device is overloaded, or the like.

Optionally, in an implementation, the first network device or the second network device may include a CU and/or a DU, or the first network device or the second network device may include an O-CU and/or an O-DU in the ORAN. For example, the first network device includes a CU and a DU, and the second network device includes a DU. In this case, the CU in the first network device may establish the first DRB, and the CU in the first network device sends the second request message to the DU in the first network device. Then, the DU in the first network device sends the second request message to the DU in the second network device. Correspondingly, the DU in the second network device establishes the second DRB, the DU in the second network device sends the first response message to the DU in the first network device, and the DU in the first network device sends the first response message to the CU in the first network device.

It should be noted that, in this implementation, the second network device autonomously determines to transmit the downlink data of the first QoS flow. To be specific, the second network device establishes the second DRB, and allocates the configuration of the second DRB to the terminal device. The first network device transmits the uplink data of the first QoS flow for the terminal device. In this way, the uplink data and the downlink data of the first QoS flow are respectively carried on the first DRB and the second DRB. For example, the uplink data of the first QoS flow is directly sent by the terminal device to the core network via the first network device, and the downlink data of the first QoS flow is sent by the core network device to the terminal device via the second network device, thereby implementing separation of the uplink data and the downlink data.

In a second case, the second DRB may be established by the first network device before dual connectivity is established. In this case, the second DRB is further used by the first network device to send the downlink data of the first QoS flow to the terminal device, or in other words, the terminal device may further receive the downlink data of the first QoS flow from the first network device by using the second DRB. In other words, before dual connectivity is established, the second DRB is used to transmit the uplink data and the downlink data of the first QoS flow between the first network device and the terminal device.

In this case, the second DRB established by the first network device may be transferred to the second network device as a DL DRB. In other words, the second network device may use the second DRB to transmit the downlink data of the first QoS flow. Therefore, it indicates that the first network device needs to establish a new DRB as a UL DRB. To be specific, the first network device establishes the first DRB to transmit the uplink data of the first QoS flow. The following steps may be considered as descriptions of negotiation, after dual connectivity is established, between the first network device and the second network device for transmission, by the second network device, of the downlink data of the first QoS flow for the terminal device.

For example, the first configuration information includes a configuration of the first DRB. For example, the configuration of the first DRB includes one or more of the following: a PDCP configuration of the first DRB, an RLC configuration of the first DRB, a mapping relationship between the first DRB and the first QoS flow, or an RLC configuration of the second DRB. The PDCP configuration of the first DRB indicates a PDCP bearer for the first DRB. The RLC configuration of the first DRB indicates an RLC bearer for the first DRB. The mapping relationship between the first DRB and the first QoS flow includes the first DRB being used to carry the uplink data of the first QoS flow. For example, the second configuration information includes a PDCP configuration of the second DRB and an RLC configuration of the second DRB. The PDCP configuration of the second DRB includes a PDCP re-establishment indication and/or a key indication used by PDCP. The RLC configuration of the second DRB includes an RLC re-establishment indication or RLC reconfiguration information. The PDCP configuration of the second DRB indicates a PDCP bearer for the second DRB. The RLC configuration of the second DRB indicates an RLC bearer for the second DRB.

Optionally, a sequence of obtaining the first DRB and the second DRB in steps S401 and S402 is not limited in this application. For example, the terminal device may obtain the first DRB and the second DRB at the same time. In other words, steps S401 and S403 may be merged into one step for execution. Optionally, the foregoing steps S402 and S404 may also be merged into one step for execution. To be specific, after generating the first configuration information and receiving the second configuration information from the second network device, the first network device may send the first configuration information and the second configuration information to the terminal device at the same time.

Optionally, before performing step S404, the second network device may negotiate with the first network device, for example, the first network device determines or the second network device independently determines, that the second network device transmits the downlink data of the first QoS flow for the terminal device.

In a first implementation, the first network device sends a third request message to the second network device. The third request message is used to request the second network device to transmit the downlink data of the first QoS flow for the terminal device. Correspondingly, after receiving the third request message, the second network device determines to transmit the downlink data of the first QoS flow for the terminal device, and then updates the configuration of the second DRB. This includes reconfiguring a PDCP entity of the second DRB.

For example, the third request message includes the PDCP configuration of the second DRB. The PDCP configuration of the second DRB indicates the PDCP bearer for the second DRB.

Optionally, the third request message includes an identifier of a DRB that is allowed to be used by the second network device, for example, a second DRB ID.

Optionally, in response to the received third request message, the second network device sends a third response message to the first network device, where the third response message includes the second configuration information. Optionally, the third response message may indicate a reconfiguration result of the second DRB, for example, a reconfiguration success or a reconfiguration failure. It should be understood that the technical solutions of this application are performed based on successful reconfiguration of the second DRB, that is, the second network device supports transmitting the downlink data of the first QoS flow for the terminal device. The downlink data of the first QoS flow is carried on the second DRB. Optionally, if the second network device does not support transmission of the first QoS flow for the terminal device, or the second DRB reconfiguration fails, the third response message may carry a failure cause value, which indicates that the second network device does not support transmission of the downlink data of the first QoS flow for the terminal device, or the like.

Optionally, in an implementation, the first network device or the second network device may include a CU and/or a DU, or the first network device or the second network device may include an O-CU and/or an O-DU in the ORAN. For example, the first network device includes a DU, and the second network device includes a CU and a DU. In this case, the DU in the first network device establishes the first DRB, and the DU in the first network device sends the third request message to the DU in the second network device. Correspondingly, the DU in the second network device sends the third request message to the CU in the second network device. Then, the CU in the second network device may establish the second DRB. The CU in the second network device sends the third response message to the DU in the second network device, and then the DU in the second network device sends the third response message to the DU in the first network device.

It should be noted that in this implementation, the first network device autonomously determines to transfer the previously established second DRB to the second network device as the DL DRB. In other words, the second network device does not need to establish the second DRB, and only needs to update the configuration of the second DRB. In other words, the second DRB updated by the second network device is used to transmit the downlink data of the first QoS flow. Therefore, the first network device needs to establish the first DRB for transmitting the uplink data of the first QoS flow. To be specific, the uplink data and the downlink data of the first QoS flow are respectively carried on the first DRB and the second DRB. For example, the uplink data of the first QoS flow is directly sent by the terminal device to a core network via the first network device, and the downlink data of the first QoS flow is sent by the core network device to the terminal device via the second network device, thereby implementing separation of the uplink data and the downlink data.

In a second implementation, the first network device sends a fourth request message to the second network device, where the fourth request message is used to request the second network device to transmit the first QoS flow for the terminal device. Correspondingly, after receiving the fourth request message, the second network device may autonomously determine to transmit the downlink data of the first QoS flow for the terminal device, and then updates a configuration of the second DRB. This includes reconfiguring a PDCP entity of the second DRB. For a specific implementation in which the second network device autonomously determines to transmit the downlink data of the first QoS flow for the terminal device, refer to the related descriptions in the first case. Details are not described herein again.

For example, the second request message includes the PDCP configuration of the second DRB. The PDCP configuration of the second DRB indicates the PDCP bearer for the second DRB.

Optionally, in response to the received fourth request message, the second network device may send a fourth response message to the first network device. The fourth response message indicates that the second network device supports transmitting the downlink data of the first QoS flow for the terminal device, and the fourth response message includes the second configuration information. In other words, the first network device may determine, based on the fourth response message, that the second network device supports transmitting the downlink data of the first QoS flow for the terminal device, and that the downlink data of the first QoS flow is carried on the second DRB. Therefore, the first network device needs to transmit the uplink data of the first QoS flow for the terminal device, that is, the first network device establishes the first DRB, and the uplink data of the first QoS flow is carried on the first DRB. Optionally, if the second network device does not support transmission of the first QoS flow for the terminal device, or the second DRB reconfiguration fails, the second network device may send, to the first network device, a failure cause value, which indicates that the second network device is overloaded or that the second network device does not support transmission of the downlink data of the first QoS flow for the terminal device, or the like.

Optionally, the second configuration information sent by the second network device may not carry a mapping relationship between the first QoS flow and the second DRB. This is because the second DRB is used to carry the downlink data of the first QoS flow, and the terminal device, as a receiver of the downlink data, may directly receive the downlink data of the first QoS flow without knowing the mapping relationship between the first QoS flow and the second DRB.

Optionally, in an implementation, the first network device or the second network device may include a CU and/or a DU, or the first network device or the second network device may include an O-CU and/or an O-DU in the ORAN. For example, the first network device includes a CU and a DU, and the second network device includes a CU and a DU. In this case, the DU in the first network device establishes the first DRB, and the DU in the first network device sends the fourth request message to the CU in the first network device. Then, the CU in the first network device sends the fourth request message to the CU in the second network device. Correspondingly, the CU in the second network device sends the fourth request message to the DU in the second network device. Then, the DU in the second network device may establish the second DRB, and the DU in the second network device sends the fourth response message to the CU in the second network device. The CU in the second network device sends the fourth response message to the CU in the first network device. Finally, the CU in the first network device sends the fourth response message to the DU in the first network device.

It should be noted that, in this implementation, the second network device autonomously determines to transmit the downlink data of the first QoS flow. To be specific, the second network device updates the configuration of the second DRB. The first network device establishes the first DRB to carry the uplink data of the first QoS flow. In this way, the uplink data and the downlink data of the first QoS flow are respectively carried on the first DRB and the second DRB. For example, the uplink data of the first QoS flow is directly sent by the terminal device to a core network via the first network device, and the downlink data of the first QoS flow is sent by the core network device to the terminal device via the second network device, thereby implementing separation of the uplink data and the downlink data.

In a third case, the first DRB and the second DRB may be established by the first network device before dual connectivity is established. In this case, before step S404 is performed, the second DRB is used by the first network device to send the downlink data of the first QoS flow to the terminal device. The second DRB is also established by the first network device. In other words, before dual connectivity is established, the first network device may configure both the first DRB and the second DRB by using the first configuration information, and the first network device receives the uplink data of the first QoS flow from the terminal device by using the first DRB, and sends the downlink data of the first QoS flow to the terminal device by using the second DRB.

Optionally, before configuring the first information, the first network device obtains capability information of the terminal device. The capability information of the terminal device indicates that the terminal device supports establishing respective DRBs for the uplink data of the first QoS flow and the downlink data of the first QoS flow. Optionally, the capability information of the terminal device may be actively reported by the terminal device to the first network device, or may be obtained by the first network device by sending a query message to the terminal device. This is not limited in this application.

Optionally, if the first network device includes an O-CU and an O-DU, the capability information of the terminal device may be obtained by the O-CU or the O-DU in the first network device.

In this case, the first DRB established by the first network device may be retained in the first network device as a UL DRB, and the second DRB may be transferred to the second network device as a DL DRB. In other words, the second network device may use the second DRB to transmit the downlink data of the first QoS flow. The following steps are descriptions of indicating, by the first network device after the dual connectivity is established, the second network device to transmit the downlink data of the first QoS flow for the terminal device.

For example, the first configuration information includes a configuration of the first DRB. For example, the configuration of the first DRB includes one or more of the following: a PDCP configuration of the first DRB, an RLC configuration of the first DRB, a mapping relationship between the first DRB and the first QoS flow, or an RLC configuration of the second DRB. The PDCP configuration of the first DRB indicates a PDCP bearer for the first DRB. The RLC configuration of the first DRB indicates an RLC bearer for the first DRB. The mapping relationship between the first DRB and the first QoS flow includes the first DRB being used to carry the uplink data of the first QoS flow. The RLC configuration of the second DRB indicates an RLC bearer for the second DRB. For example, the second configuration information includes a PDCP configuration of the second DRB and an RLC configuration of the second DRB. The PDCP configuration of the second DRB includes a PDCP re-establishment indication and/or a key indication used by PDCP. The RLC configuration of the second DRB includes an RLC re-establishment indication or RLC reconfiguration information. The PDCP configuration of the second DRB indicates a PDCP bearer for the second DRB. The RLC configuration of the second DRB indicates the RLC bearer for the second DRB.

Optionally, before performing step S404, the second network device may indicate that the second network device transmits the downlink data of the first QoS flow for the terminal device.

In an implementation, the first network device sends third indication information to the second network device. The third indication information indicates the second network device to send the downlink data of the first QoS flow to the terminal device by using the second DRB. Correspondingly, the second network device receives the third indication information, and updates the configuration of the second DRB. This includes reconfiguring a PDCP entity of the second DRB.

Optionally, in an implementation, the first network device or the second network device may include a CU and/or a DU, or the first network device or the second network device may include an O-CU and/or an O-DU in the ORAN. For example, the first network device includes a CU and a DU, and the second network device includes a CU and a DU. In this case, the DU in the first network device generates or obtains the third indication information and sends the third indication information to the CU in the first network device. The CU in the first network device sends the third indication information to the CU in the second network device. Correspondingly, the CU in the second network device sends the third indication information to the DU in the second network device, and the DU in the second network device can update the configuration of the second DRB. Further optionally, the DU in the second network device may send the updated configuration of the second DRB to the first network device via the CU in the second network device, so that the second network device transmits the downlink data of the first QoS flow to the terminal device by using the second DRB.

Optionally, in this embodiment of this application, the downlink data of the first QoS flow may be transmitted by using a split bearer (SN terminated split bearer). To be specific, the second network device may send the downlink data of the first QoS flow to the first network device, and the first network device sends the downlink data of the first QoS flow to the terminal device through an air interface of the first network device, to improve downlink data transmission efficiency.

For example, the second network device sends first indication information to the first network device, where the first indication information indicates the first network device to establish the RLC bearer for the second DRB. Correspondingly, after receiving the first indication information, the first network device establishes the RLC bearer for the second DRB, and sends the RLC configuration of the second DRB to the terminal device, where the RLC configuration of the second DRB indicates the RLC bearer for the second DRB.

Optionally, in an implementation, the first network device includes an O-CU, and the second network device includes an O-DU. After obtaining the first indication information from the O-DU in the second network device, the O-CU in the first network device establishes the RLC bearer for the second DRB, and sends the RLC configuration of the second DRB to the terminal device, so that the terminal device determines that the downlink data of the first QoS flow can be subsequently received from the O-CU in the first network device, or the downlink data of the first QoS flow may be received from the O-DU in the second network device. This improves data transmission efficiency.

Based on this implementation, after receiving the downlink data of the first QoS flow from the core network element, the second network device may directly send a part of the downlink data to the terminal device, and send the other part of the downlink data to the first network device through an inter-station interface. Then, the first network device sends the other part of the downlink data to the terminal device by using the RLC bearer for the second DRB. In other words, the terminal device may receive the downlink data of the first QoS flow from the first network device and the second network device.

Optionally, the first indication information and the second configuration information may be sent at the same time, or may not be sent at the same time. Alternatively, the first indication information and the second configuration information may be carried in one data packet for sending, or may be respectively carried in two data packets for sending. This is not limited in this application.

The following describes implementations of establishing or updating a first tunnel between the first network device and the core network element, a second tunnel between the second network device and the core network element, and a third tunnel between the first network device and the second network device.

For example, the core network element may be a UPF, an AMF, or another core network element. For ease of description, in this embodiment of this application, when the core network element is the UPF, the UPF may transmit downlink data of the first QoS flow to, and receive uplink data of the first QoS flow from, the first network device or the second network device through the tunnel. When the core network element is the AMF, the AMF may establish or update the tunnel, for transmission of the uplink data and the downlink data of the first QoS flow between the UPF and the first network device or the second network device.

Optionally, in an implementation, because the downlink data of the first QoS flow may be transmitted by using a split bearer, the first network device may send, to the second network device after establishing the RLC bearer for the second DRB, endpoint information that indicates a third tunnel. The third tunnel is a tunnel between the first network device and the second network device, and the third tunnel is used to transmit the downlink data of the first QoS flow between the first network device and the second network device. For example, after receiving the downlink data of the first QoS flow from the core network element, the second network device may send the downlink data of the first QoS flow to the first network device through the third tunnel.

The endpoint information that indicates the third tunnel indicates endpoint information #1 of the third tunnel on the first network device side, and the endpoint information #1 includes an endpoint identifier of the first network device and/or endpoint address information of the first network device. The second network device may determine information (for example, an endpoint #1) about the third tunnel on the first network device side based on the endpoint information #1, and then establish the third tunnel with the first network device. Subsequently, the second network device may send the downlink data of the first QoS flow to the endpoint #1.

Optionally, the third tunnel may be established by the second network device, or may be an existing tunnel between the first network device and the second network device. This is not limited in this application.

Based on the foregoing solution, the second network device supports transmitting the downlink data of the first QoS flow for the terminal device. The following describes an implementation of establishing the second tunnel by the second network device and the core network element.

Optionally, in an implementation, the first network device sends second indication information to the second network device, where the second indication information indicates the second network device to establish the second tunnel. The second tunnel is a tunnel between the second network device and the core network element, and the second tunnel is used by the second network device to receive the downlink data of the first QoS flow from the core network element. Correspondingly, the second network device establishes the second tunnel after receiving the second indication information. To be specific, for the downlink data of the first QoS flow, the second network device may receive the downlink data of the first QoS flow from the core network element through the second tunnel, and send the downlink data of the first QoS flow to the terminal device by using the second DRB, to complete transmission of the downlink data of the first QoS flow.

Optionally, if the second network device includes a CU or a DU, the second tunnel may be established by the CU or the DU in the second network device.

Optionally, the second indication information includes endpoint information #2 that indicates the second tunnel. The endpoint information #2 that indicates the second tunnel indicates endpoint information #2 of the second tunnel on the core network element side. The endpoint information #2 includes an endpoint identifier of the core network element and/or endpoint address information of the core network element. Correspondingly, the second network device may determine information (for example, an endpoint #2) about the second tunnel on the core network element side based on the endpoint information #2, and then establish the second tunnel with the core network element. Subsequently, the second network device may receive the downlink data of the first QoS flow from the endpoint #2.

Optionally, in an implementation, the endpoint information #2 that indicates the second tunnel may be endpoint information, on the core network element side, of the first tunnel established between the first network device and the core network element before dual connectivity is established. The endpoint information #2 may be obtained by the first network device from the core network element (for example, the AMF). This is not limited in this application.

Optionally, the second indication information and the first request message, the second request message, the third request message, or the fourth request message may be sent at the same time, or may not be sent at the same time. Alternatively, the second indication information and the first request message, the second request message, the third request message, or the fourth request message may be carried in one data packet for sending, or may be respectively carried in two data packets for sending. Alternatively, the second indication information may be carried in the first request message, the second request message, the third request message, or the fourth request message. This is not limited in this application.

Optionally, in an implementation, after establishing the second tunnel, the second network device may send, to the first network device, endpoint information #3 that indicates the second tunnel. The endpoint information #3 that indicates the second tunnel indicates endpoint information #3 of the second tunnel on the second network device side. The endpoint information #3 includes an endpoint identifier of the second network device and/or address information of the second network device. Correspondingly, the first network device may subsequently send the endpoint information #3 to the core network element, so that the core network element may establish or update the second tunnel, determine information (for example, an endpoint #3) about the second tunnel on the second network device side based on the endpoint information #3, and then the core network element may send the downlink data of the first QoS flow to the endpoint #3. For details, refer to the following step S406.

S406: The first network device sends, to the core network element, the endpoint information #3 that indicates the second tunnel. Correspondingly, the core network element receives, from the first network device, the endpoint information #3 that indicates the second tunnel.

Optionally, it is assumed that the first network device includes an O-CU and an O-DU, and the second network device includes a CU. After the O-CU in the first network device determines the endpoint information #3, the O-DU in the first network device may send the endpoint information #3. Then, the O-DU in the first network device sends the endpoint information #3 to the CU in the second network device. Finally, the CU in the second network device sends the endpoint information #3 to the core network element, so that the core network element subsequently transmit the downlink data of the first QoS flow to the CU in the second network device based on the endpoint information #3.

It should be understood that the core network element establishes or updates the second tunnel after receiving the endpoint information #3 that indicates the second tunnel.

Optionally, the endpoint information #3 and the first response message, the second response message, the third response message, or the fourth response message may be sent at the same time, or may not be sent at the same time. The endpoint information #3 and the first response message, the second response message, the third response message, or the fourth response message may be carried in one data packet for sending, or may be respectively carried in two data packets for sending. Alternatively, the endpoint information #3 may be carried in the first response message, the second response message, the third response message, or the fourth response message. This is not limited in this application.

Optionally, the second tunnel may be established by the core network element and the second network device, or may be an existing tunnel between the core network element and the second network device. This is not limited in this application. Based on this, the core network element may determine the information (for example, the endpoint #3) about the second tunnel on the second network device side, so that the core network element may send the downlink data of the first QoS flow to the endpoint #3.

It should be understood that before dual connectivity is established, the uplink data of the first QoS flow is transmitted between the first network device and the core network element through the first tunnel. In other words, the first tunnel is established by the first network device before dual connectivity is established. The first tunnel is used by the first network device to send the uplink data of the first QoS flow to the core network element, or in other words, the core network element may send the uplink data of the first QoS flow to the first network device through the first tunnel.

Optionally, in an implementation, the first network device may send, to the core network element, a message that indicates to retain the first tunnel. It should be understood that retaining the first tunnel may be understood as: indicating the core network element to retain endpoint information #4 of the first tunnel on the first network device side, or indicating the core network element not to delete the first tunnel, that is, the first tunnel is still used to transmit the uplink data of the first QoS flow between the core network element and the first network device. The endpoint information #4 includes an endpoint identifier and/or endpoint address information.

Optionally, the message that indicates to retain the first tunnel and the endpoint information #3 in step S406 may be sent at the same time, or may not be sent at the same time; or the message that indicates to retain the first tunnel and the endpoint information #3 in step S406 may be carried in one data packet for sending, or may be respectively carried in two data packets for sending. This is not limited in this application.

Based on this, the uplink data of the first QoS flow may be transmitted between the core network element and the first network device through the first tunnel, and/or the downlink data of the first QoS flow may be transmitted between the core network element and the second network device through the second tunnel.

Optionally, in an implementation, the endpoint information of the first tunnel on the core network element side may be the same as or different from the endpoint information of the second tunnel on the core network element side. This is not limited in this application.

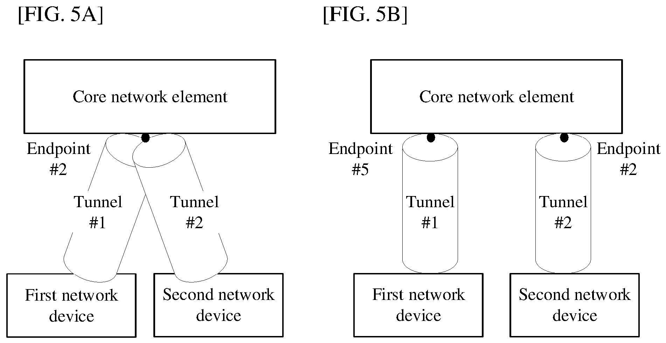

For example, if the endpoint information of the first tunnel on the core network element side is the same as the information of the second tunnel on the core network element side, for example, both are the endpoint #2, it indicates that the endpoint #2 on the core network element side is associated with the first tunnel and the second tunnel, as shown in FIG. 5A. Subsequently, the first network device sends the uplink data of the first QoS flow to the endpoint #2, and the second network device receives the downlink data of the first QoS flow from the endpoint #2.

For another example, if the endpoint information of the first tunnel on the core network element side is different from the endpoint of the second tunnel on the core network element side, the core network element may send endpoint information #5 to the first network device. The endpoint information #5 represents endpoint information #5 on the core network element side. An endpoint #5 indicated by the endpoint information #5 and the endpoint #2 on the core network element side are two different endpoints, which are respectively used as endpoints of the first tunnel and the second tunnel on the core network element side. In other words, the first tunnel and the second tunnel are two independent tunnels. The core network element may receive the uplink data of the first QoS flow from the first network device at the endpoint #5, and/or the core network element may send the downlink data of the first QoS flow to the second network device at the endpoint #2, as shown in FIG. 5B.

Based on the first DRB, the second DRB, the first tunnel, and the second tunnel, the uplink data of the first QoS flow and/or the downlink data of the first QoS flow may be transmitted between the terminal device and the core network element. In an implementation, a transmission procedure of the uplink data and the downlink data of the first QoS flow includes the following steps S407 to S410. S407 and S408 are transmission manners of the uplink data of the first QoS flow, and S409 and S410 are transmission manners of the downlink data of the first QoS flow.

S407: The terminal device sends the uplink data of the first QoS flow to the first network device by using the first DRB. Correspondingly, the first network device receives the uplink data of the first QoS flow by using the first DRB.

S408: The first network device sends the uplink data of the first QoS flow to the core network element through the first tunnel. Correspondingly, the core network element receives the uplink data of the first QoS flow from the first network device through the first tunnel.

S409: The core network element sends the downlink data of the first QoS flow to the second network device through the second tunnel. Correspondingly, the second network device receives the downlink data of the first QoS flow from the core network element through the second tunnel.

S410: The second network device sends the downlink data of the first QoS flow to the terminal device by using the second DRB. Correspondingly, the terminal device receives the downlink data of the first QoS flow from the second network device by using the second DRB.

Optionally, in an implementation, when the downlink data of the first QoS flow is transmitted by using the split bearer, the second network device may send a part of the downlink data of the first QoS flow to the terminal device by using the second DRB, and send the other part of the downlink data of the first QoS flow to the first network device through the third tunnel. The first network device sends the other part of the downlink data to the terminal device by using the RLC bearer for the second DRB. This is to increase a transmission rate of the downlink data of the first QoS flow.

Optionally, in this embodiment of this application, if the first network device or the second network device includes the CU and the DU, for the foregoing provided implementation, an action of receiving and sending a message or data (for example, the first configuration information, the second configuration information, the first request message, or the second request message) may be performed by the DU, and an action of performing or processing content of the message or the data may be performed by the CU. Alternatively, the action of receiving and sending a message or data may be performed by the CU, and the action of performing or processing content of the message or data may be performed by the DU. This is not limited in this application.

It should be noted that, for the solution shown in FIG. 4, steps S401, S403, and S407 to S410 are performed, so that the uplink data and the downlink data of the first QoS flow on the terminal device side can be separately transmitted, thereby improving end-to-end transmission performance between the terminal device and the core network element. One or more of step S402, step S404, step S405, or step S406 are optional steps, and are merely optional examples provided for ease of understanding. All or a part or none of the steps may be performed. This is not limited in this application.

Based on the foregoing solution, the uplink data of the first QoS flow is transmitted by the first network device from the terminal device to the core network element by using the first DRB and the first tunnel, and the downlink data of the first QoS flow is transmitted by the second network device from the core network element to the terminal device by using the second DRB and the second tunnel. Optionally, the downlink data of the first QoS flow may be transmitted by the second network device to the first network device, and that the first network device transmits downlink data of the first QoS flow to the terminal device, thereby implementing separate transmission of the uplink data and the downlink data of the first QoS flow. In addition, the uplink data of the first QoS flow may be transmitted by the first network device to the core network element without being forwarded by the second network device. This can reduce a transmission delay of the uplink data of the first QoS flow, and improve transmission performance.

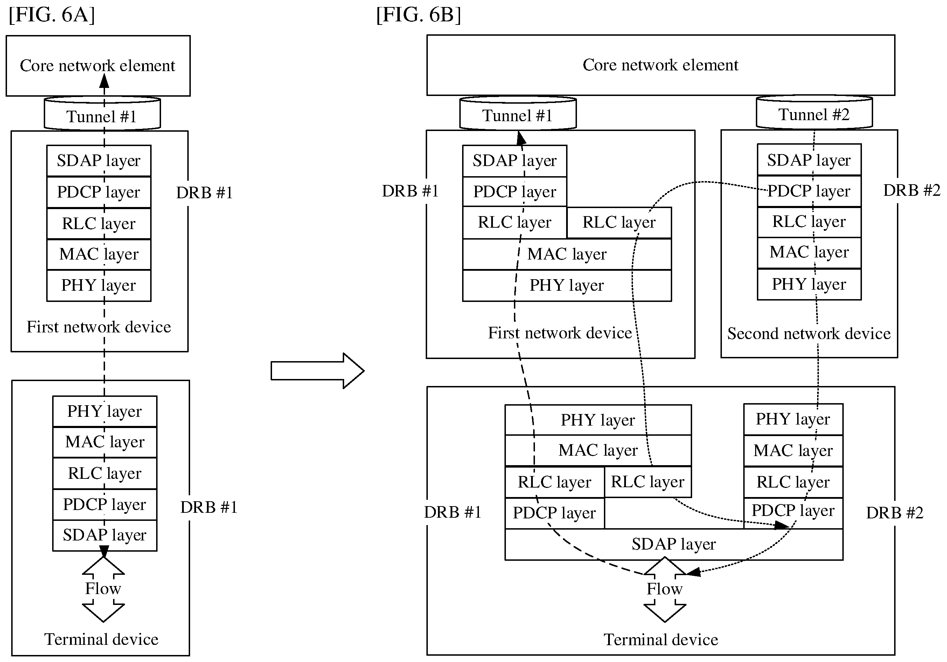

The following describes protocol stacks in the three cases in the foregoing method 400 with reference to FIG. 6A to FIG. 8B.

FIG. 6A and FIG. 6B are diagrams of a protocol stack according to an embodiment of this application. For a first case, as shown in FIG. 6A, before dual connectivity is established, data is transmitted between a terminal device and a core network element by a first network device. For example, the first network device establishes a DRB #1 and a tunnel #1. For uplink transmission, the terminal device sends uplink data to the first network device by using a DRB #1, and then the first network device sends the uplink data to the core network element through the tunnel #1. For downlink transmission, the core network element sends downlink data to the first network device through the tunnel #1, and then the first network device sends the downlink data to the terminal device by using the DRB #1. In other words, the uplink data and the downlink data are transmitted between the terminal device and the core network element by the first network device by using the DRB #1 and the tunnel #1.

As shown in FIG. 6B, after dual connectivity is established, the DRB #1 and the tunnel #1 that are previously established by the first network device are used to transmit uplink data of a first QoS flow, and a second network device establishes a DRB #2 and a tunnel #2 to transmit downlink data of the first QoS flow. It can be learned from the figure that the second network device side includes an SDAP layer, a PDCP layer, an RLC layer, a MAC layer, and a PHY layer of the DRB #2, and the second network device sends a configuration of the DRB #2 to the terminal device for the terminal device to establish the DRB #2. The terminal device side includes the SDAP layer, the PDCP layer, the RLC layer, the MAC layer, and the PHY layer of the DRB #2. For example, for uplink transmission, the terminal device sends uplink data to the first network device by using the DRB #1, and then the first network device sends the uplink data to the core network element through the tunnel #1. For downlink transmission, the core network element sends downlink data to the second network device through the tunnel #2, and then the second network device sends the downlink data to the terminal device by using the DRB #2. In other words, the uplink data of the first QoS flow is transmitted by the first network device by using the DRB #1 and the tunnel #1, and the downlink data of the first QoS flow is transmitted by the first network device by using the DRB #2 and the tunnel #2.

Optionally, the downlink data of the first QoS flow may alternatively be transmitted by using a split bearer. For example, the first network device side establishes an RLC bearer for the DRB #2, and sends an RLC configuration of the DRB #2 to the terminal device. To be specific, after receiving the downlink data from the core network element, the second network device may directly send a part of the downlink data to the terminal device, and send the other part of the downlink data to the first network device through an inter-station interface. Then, the first network device sends the other part of the downlink data to the terminal device by using the RLC bearer for the DRB #2.

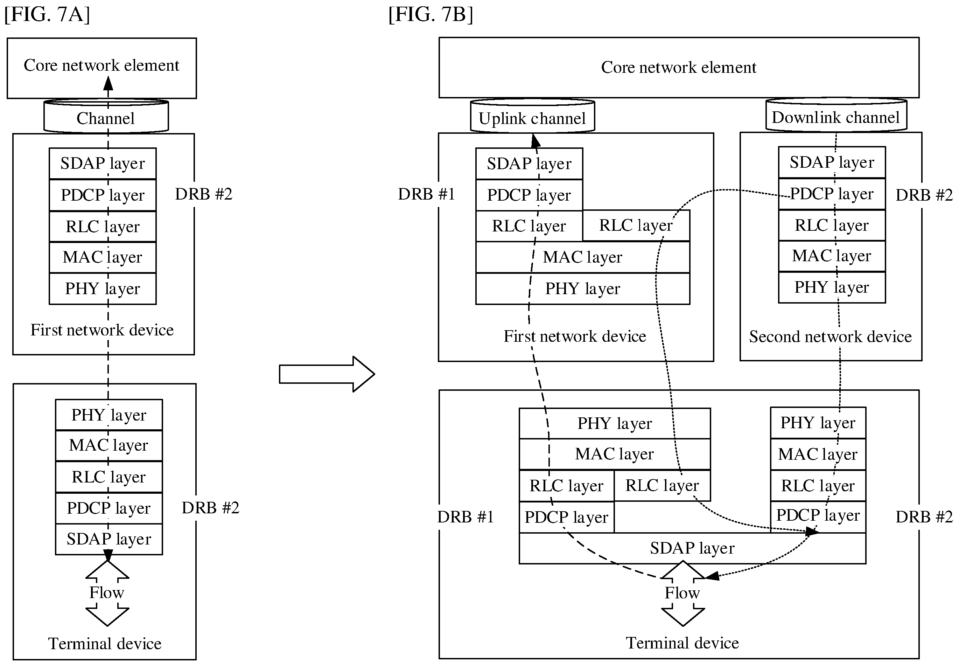

FIG. 7A and FIG. 7B are diagrams of a protocol stack according to an embodiment of this application. For a second case, as shown in FIG. 7A, before dual connectivity is established, data is transmitted between a terminal device and a core network element by a first network device. For example, the first network device establishes a DRB #2 and a tunnel #1. For uplink transmission, the terminal device sends uplink data to the first network device by using the DRB #2, and the first network device sends the uplink data to the core network element through the tunnel #1. For downlink transmission, the core network element sends downlink data to the first network device through the tunnel #1, and then the first network device sends the downlink data to the terminal device by using the DRB #2. In other words, the uplink data and the downlink data are transmitted between the terminal device and the core network element by the first network device by using the DRB#2 and the tunnel #1.

As shown in FIG. 7B, after dual connectivity is established, the DRB #2 previously established by the first network device is used by the second network device to transmit downlink data of a first QoS flow, and the first network device establishes the DRB #2 to transmit uplink data of the first QoS flow. It can be learned from the figure that, the first network device side includes an SDAP layer, a PDCP layer, an RLC layer, a MAC layer, and a PHY layer of the DRB #1, and the first network device sends a configuration of the DRB #1 to the terminal device for the terminal device to establish the DRB #1. The terminal device side includes the SDAP layer, the PDCP layer, the RLC layer, the MAC layer, and the PHY layer of the DRB #1. For example, for uplink transmission, the terminal device sends uplink data to the first network device by using the DRB #1, and then the first network device sends the uplink data to the core network element through the tunnel #1. For downlink transmission, the core network element sends downlink data to the second network device through the tunnel #2, and then the second network device sends the downlink data to the terminal device by using the DRB #2. In other words, the uplink data of the first QoS flow is transmitted by the first network device by using the DRB #1 and the tunnel #1, and the downlink data of the first QoS flow is transmitted by the first network device by using the DRB #2 and the tunnel #2.

Optionally, the downlink data of the first QoS flow may alternatively be transmitted by using a split bearer. For example, the first network device side establishes an RLC bearer for the DRB #2, and sends an RLC configuration of the DRB #2 to the terminal device. To be specific, after receiving the downlink data from the core network element, the second network device may directly send a part of the downlink data to the terminal device, and send the other part of the downlink data to the first network device through an inter-station interface. Then, the first network device sends the other part of the downlink data to the terminal device by using the RLC bearer for the DRB #2.

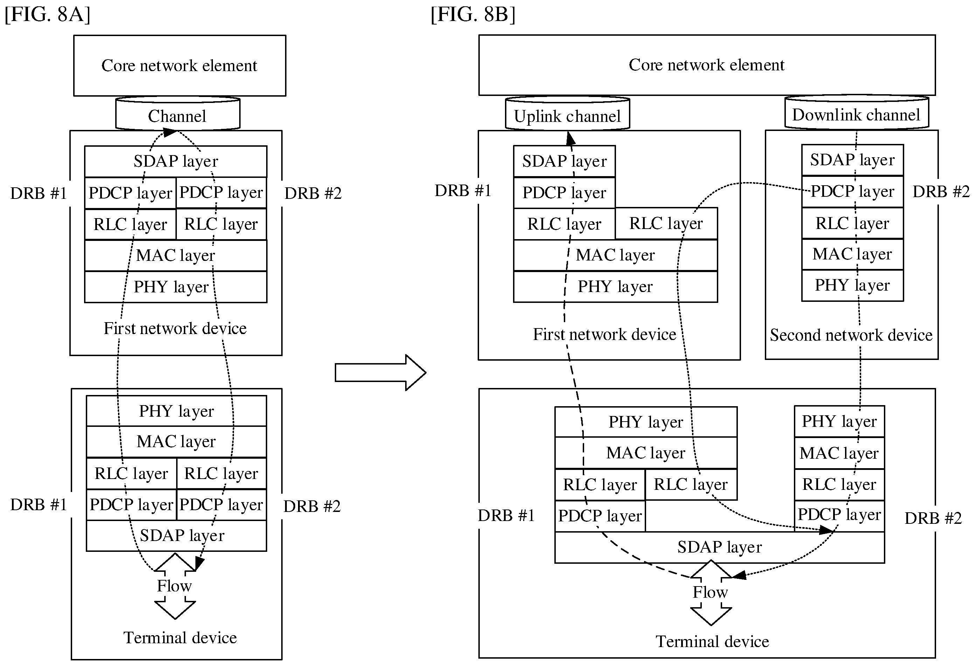

FIG. 8A and FIG. 8B are diagrams of a protocol stack according to an embodiment of this application. For a third case, as shown in FIG. 8A, before dual connectivity is established, data is transmitted between a terminal device and a core network element by a first network device. For example, the first network device establishes a DRB #1, a DRB #2, and a tunnel #1. For uplink transmission, the terminal device sends uplink data to the first network device by using the DRB #1, and then the first network device sends the uplink data to the core network element through the tunnel #1. For downlink transmission, the core network element sends downlink data to the first network device through the tunnel #1, and then the first network device sends the downlink data to the terminal device by using the DRB #2. In other words, the uplink data and the downlink data are transmitted between the terminal device and the core network element by the first network device by using the DRB #1, the DRB #2, and the tunnel #1.

As shown in FIG. 8B, after dual connectivity is established, the DRB #1 and the tunnel #1 that are previously established by the first network device are used by the first network device to transmit uplink data of a first QoS flow, the DRB #2 is used by a second network device to transmit downlink data of the first QoS flow, and the second network device establishes a tunnel #2 for transmission of uplink data and downlink data between the core network element and the second network device. For example, for uplink transmission, the terminal device sends uplink data to the first network device by using the DRB #1, and then the first network device sends the uplink data to the core network element through the tunnel #1. For downlink transmission, the core network element sends downlink data to the second network device through the tunnel #2, and then the second network device sends the downlink data to the terminal device by using the DRB #2. In other words, the uplink data of the first QoS flow is transmitted by the first network device by using the DRB #1 and the tunnel #1, and the downlink data of the first QoS flow is transmitted by the first network device by using the DRB #2 and the tunnel #2.

Optionally, the downlink data of the first QoS flow may alternatively be transmitted by using a split bearer. For example, the first network device side establishes an RLC bearer for the DRB #2, and sends an RLC configuration of the DRB #2 to the terminal device. To be specific, after receiving the downlink data from the core network element, the second network device may directly send a part of the downlink data to the terminal device, and send the other part of the downlink data to the first network device through an inter-station interface. Then, the first network device sends the other part of the downlink data to the terminal device by using the RLC bearer for the DRB #2.

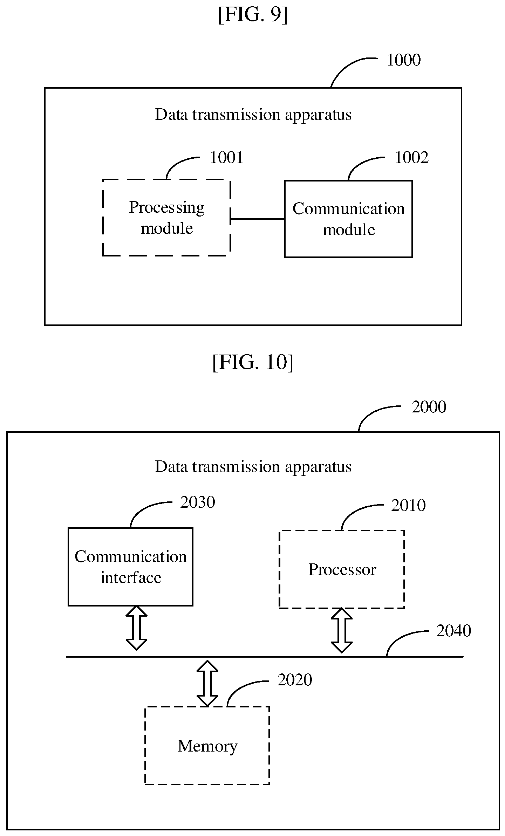

The foregoing describes embodiments of the data transmission method side of this application with reference to FIG. 1 to FIG. 8B. The following describes in detail embodiments of the data transmission apparatus side of this application with reference to FIG. 9 and FIG. 10. It should be understood that descriptions of the apparatus embodiments correspond to the descriptions of the method embodiments, and therefore for a part that is not described in detail, refer to the foregoing method embodiments.

FIG. 9 is a diagram of a data transmission apparatus 1000 according to an embodiment of this application. As shown in FIG. 9, the data transmission apparatus 1000 includes a communication module 1002, and optionally, may further include a processing module 1001. The data transmission apparatus 1000 may be a first network device (for example, an MN), or may be a data transmission apparatus, for example, a chip, a chip system, or a circuit, that is applied to a first network device or can be used in combination with the first network device and that can implement a method performed by the first network device. Alternatively, the data transmission apparatus 1000 may be a second network device (for example, an SN), or may be a data transmission apparatus, for example, a chip, a chip system, or a circuit, that is applied to a second network device or can be used in combination with the second network device and that can implement a method performed by the second network device. Alternatively, the data transmission apparatus 1000 may be a terminal device (for example, UE), or may be a data transmission apparatus, for example, a chip, a chip system, or a circuit, that is applied to a terminal device or can be used in combination with the terminal device and that can implement a method performed by the terminal device. Alternatively, the data transmission apparatus 1000 may be a core network element (for example, an AMF/a UPF), or may be a data transmission apparatus, for example, a chip, a chip system, or a circuit, that is applied to a core network element or that can be used in combination with the core network element and that can implement a method performed by the core network element.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the first network device, the second network device, the terminal device, or the core network element in the foregoing method. A component that is configured to implement the receiving function in the communication module may be considered as a receiving unit, and a component that is configured to implement the sending function in the communication module may be considered as a sending unit. In other words, the communication module includes the receiving unit and the sending unit.

When the data transmission apparatus 1000 is applied to the first network device, the processing module 1001 may be configured to implement a processing function of the first network device in the foregoing embodiments, and the communication module 1002 may be configured to implement receiving and sending functions of the first network device in the foregoing embodiments.

When the data transmission apparatus 1000 is applied to the second network device, the processing module 1001 may be configured to implement a processing function of the second network device in the foregoing embodiments, and the communication module 1002 may be configured to implement receiving and sending functions of the second network device in the foregoing embodiments.

When the data transmission apparatus 1000 is applied to the terminal device, the processing module 1001 may be configured to implement a processing function of the terminal device in the foregoing embodiments, and the communication module 1002 may be configured to implement receiving and sending functions of the terminal device in the foregoing embodiments.

When the data transmission apparatus 1000 is applied to the core network element, the processing module 1001 may be configured to implement a processing function of the core network element in the foregoing embodiments, and the communication module 1002 may be configured to implement receiving and sending functions of the core network element in the foregoing embodiments.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit). The communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 10 is a diagram of another data transmission apparatus 2000 according to an embodiment of this application. As shown in FIG. 10, optionally, the data transmission apparatus 2000 may be a chip or a chip system. Optionally, in this application, the chip system may include a chip, or may include a chip and another discrete component.

The data transmission apparatus 2000 may be configured to implement a function of any network element (for example, the first network device, the second network device, the terminal device, or the core network element) in the communication system described in the foregoing examples. The data transmission apparatus 2000 may include a communication interface 2030, and the data transmission apparatus 2000 may exchange information with another device through the communication interface 2030. For example, the communication interface 2030 may be a transceiver, a circuit, a bus, a module, a pin, or a communication interface of another type. When the data transmission apparatus 2000 is a chip-type apparatus or circuit, the communication interface 2030 in the apparatus 2000 may also be an input/output circuit, and may input information (or referred to as receiving information) and output information (or referred to as sending information). The processor 2010 is an integrated processor, a microprocessor, an integrated circuit, a logic circuit, or the like. The processor may determine output information based on input information.

The data transmission apparatus 2000 may further include at least one processor 2010. Optionally, the processor 2010 is coupled to a memory. The memory may be located in the apparatus. Alternatively, the memory may be integrated with the processor. Alternatively, the memory may be located outside the apparatus. For example, the data transmission apparatus 2000 may further include at least one memory 2020. The memory 2020 stores a computer program, a computer program or instructions, and/or data that are necessary for implementing any one of the foregoing examples. The processor 2010 may execute the computer program stored in the memory 2020, to perform the method in any one of the foregoing examples.

The coupling in this application may be an indirect coupling or a communication connection between apparatuses, units, or modules in an electrical form, a mechanical form, or another form, and is used for information exchange between the apparatuses, the units, or the modules. The processor 2010 may operate collaboratively with the memory 2020 and the communication interface 2030. A specific connection medium between the processor 2010, the memory 2020, and the communication interface 2030 is not limited in this application.

Optionally, as shown in FIG. 10, the processor 2010, the memory 2020, and the communication interface 2030 are connected to each other through a bus 2040. Optionally, the bus may include a type of bus such as an address bus, a data bus, or a control bus. In addition, for ease of representation, FIG. 10 shows one bus 2040, but this does not mean that there is only one bus or only one type of bus.

It should be understood that the processor mentioned in this embodiment of this application may be the following device or a part of circuits configured for a processing function in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example instead of limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described in this specification is intended to include, but is not limited to, these and any other suitable types of memories.

An embodiment of this application further provides a computer-readable storage medium. The computer-readable storage medium stores computer instructions used to implement the methods performed by the first network device, the second network device, the terminal device, or the core network element in the foregoing method embodiments.

An embodiment of this application further provides a computer program product, including instructions. When the instructions are executed by a computer, the method performed by the first network device, the second network device, the terminal device, or the core network element in the foregoing method embodiments is implemented.

An embodiment of this application further provides a communication system. The communication system includes one or more of the first network device, the second network device, or the core network element in the foregoing embodiments. Optionally, the communication system further includes a terminal device.

For explanations and beneficial effect of related content in any one of the apparatuses provided above, refer to the corresponding method embodiment provided above. Details are not described herein again.

For ease of understanding the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, the character "/" usually indicates an "or" relationship between associated objects. "At least one of the following items (pieces)" or a similar expression thereof means any combination of these items, including any combination of singular items (pieces) or plural items (pieces). For example, at least one (piece) of a, b, and c may indicate a, b, c, a and b, a and c, b and c, or a, b, and c. Each of a, b, and c may be singular or plural.
(3) In this application, "first", "second", and various numbers (for example, #1 and #2) are merely used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "indicate" may include "directly indicate" and "indirectly indicate". When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. An example sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.
(6) In this application, a "protocol" may be a standard protocol in the communication field, for example, may include a 5G protocol, an NR protocol, and a related protocol used in a future communication system. This is not limited in this application. "Predefined" may include being defined in advance, for example, being protocol-defined. "Preconfiguration" may be implemented by pre-storing corresponding code or a corresponding table in a device, or may be implemented in another manner that may indicate related information. A specific implementation thereof is not limited in this application.
(7) In this application, "communication" may also be described as "data transmission", "information transmission", "data processing", or the like. "Transmission" includes "sending" and "receiving".

In this application, a configuration may be a signaling configuration, or may be described as configuration signaling. For example, the signaling configuration may be configured by a second apparatus (for example, a network device) by sending signaling. The signaling may be a radio resource control (radio resource control, RRC) message, downlink control information (downlink control information, DCI), or a system information block (system information block, SIB). For another example, the signaling configuration may be preconfigured signaling sent to a first apparatus (for example, a terminal device), or configured for a first apparatus (for example, a terminal device) in a preconfiguration manner. Herein, the preconfiguration is predefining or configuring a value of a corresponding parameter in a protocol manner, and may be stored in the first apparatus (for example, the terminal device) when communication with the first apparatus (for example, the terminal device) is performed. This is not limited in this application.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or a part contributing to a conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending first configuration information to a terminal device, wherein the first configuration information is used to configure a first data radio bearer DRB, and the first DRB is used by a first network device to receive uplink data of a first quality of service QoS flow; and
sending second configuration information to the terminal device, wherein the second configuration information is used to configure a second DRB, and the second DRB is used to receive downlink data of the first QoS flow from a second network device.

2. The method according to claim 1, wherein before sending the second configuration information to the terminal device, the method further comprises: receiving the second configuration information from the second network device.

3. The method according to claim 1 or 2, wherein before the second configuration information is sent to the terminal device, the first DRB is further used by the first network device to send the downlink data of the first QoS flow.

4. The method according to claim 3, wherein before receiving the second configuration information from the second network device, the method further comprises:
sending a first request message to the second network device, wherein the first request message is used to request the second network device to transmit the downlink data of the first QoS flow for the terminal device, and the first request message comprises information about the first QoS flow.

5. The method according to claim 3, wherein before receiving the second configuration information from the second network device, the method further comprises:
sending a second request message to the second network device, wherein the second request message is used to request the second network device to transmit the first QoS flow for the terminal device, and the second request message comprises information about the first QoS flow.

6. The method according to claim 1 or 2, wherein before the second configuration information is sent to the terminal device, the second DRB is used by the first network device to receive the uplink data of the first QoS flow, and is used by the first network device to send the downlink data of the first QoS flow.

7. The method according to claim 6, wherein before receiving the second configuration information from the second network device, the method further comprises:
sending a third request message to the second network device, wherein the third request message is used to request the second network device to transmit the downlink data of the first QoS flow for the terminal device, and the third request message comprises a packet data convergence protocol PDCP configuration of the second DRB and a mapping relationship between the second DRB and the first QoS flow.

8. The method according to claim 6, wherein before receiving the second configuration information from the second network device, the method further comprises:
sending a fourth request message to the second network device, wherein the fourth request message is used to request the second network device to transmit the first QoS flow for the terminal device, and the fourth request message comprises a PDCP configuration of the second DRB and a mapping relationship between the second DRB and the first QoS flow.

9. The method according to any one of claims 4 to 8, wherein receiving the second configuration information from the second network device comprises: receiving a response message from the second network device, wherein the response message indicates that the second network device transmits the downlink data of the first QoS flow for the terminal device, and the response message comprises the second configuration information.

10. The method according to claim 1 or 2, wherein before the second configuration information is sent to the terminal device, the first configuration information is further used to configure the second DRB, and the second DRB is used by the first network device to send the downlink data of the first QoS flow.

11. The method according to claim 10, wherein before receiving the second configuration information from the second network device, the method further comprises:
sending third indication information to the second network device, wherein the third indication information indicates the second network device to send the downlink data of the first QoS flow to the terminal device by using the second DRB.

12. The method according to claim 10 or 11, wherein before sending the first configuration information to the terminal device, the method further comprises: obtaining capability information of the terminal device, wherein the capability information indicates that the terminal device supports establishing respective DRBs for the uplink data of the first QoS flow and the downlink data of the first QoS flow.

13. The method according to any one of claims 1 to 12, wherein the method further comprises:
receiving first indication information from the second network device, wherein the first indication information indicates the first network device to establish a radio link control RLC bearer for the second DRB.

14. The method according to claim 13, wherein the method further comprises: sending an RLC configuration of the second DRB to the terminal device, wherein the RLC configuration of the second DRB indicates the RLC bearer for the second DRB.

15. The method according to claim 13 or 14, wherein the method further comprises:
sending, to the second network device, endpoint information that indicates a third tunnel, wherein the third tunnel is used by the first network device to receive the downlink data of the first QoS flow from the second network device.

16. The method according to any one of claims 1 to 15, wherein the method further comprises:
sending second indication information to the second network device, wherein the second indication information indicates the second network device to establish a second tunnel, and the second tunnel is used by the second network device to receive the downlink data of the first QoS flow from a core network element.

17. The method according to claim 16, wherein the method further comprises: sending, to the core network element, endpoint information that indicates the second tunnel.

18. The method according to any one of claims 1 to 17, wherein the method further comprises:
sending, to the core network element, a message that indicates to retain a first tunnel, wherein the first tunnel is established by the first network device, and the first tunnel is used by the first network device to send the uplink data of the first QoS flow to the core network element.

19. A data transmission method, comprising:
obtaining a first data radio bearer DRB, wherein the first DRB is used by a terminal device to send uplink data of a first quality of service QoS flow to a first network device;
obtaining a second DRB, wherein the second DRB is used by the terminal device to receive downlink data of the first QoS flow from a second network device; and
sending the uplink data of the first QoS flow to the first network device by using the first DRB, and/or receiving the downlink data of the first QoS flow from the second network device by using the second DRB.

20. The method according to claim 19, wherein obtaining the first DRB comprises: obtaining the first DRB from the first network device.

21. The method according to claim 19 or 20, wherein before the second DRB is obtained, the first DRB is further used by the terminal device to receive the downlink data of the first QoS flow from the first network device.

22. The method according to claim 19, wherein obtaining the first DRB comprises: receiving first configuration information, wherein the first configuration information is used to configure the first DRB.

23. The method according to claim 22, wherein obtaining the second DRB comprises:
receiving second configuration information, wherein the second configuration information is used to configure the second DRB.

24. The method according to any one of claims 19 to 23, wherein the method further comprises:
obtaining a radio link control RLC configuration of the second DRB, wherein the RLC configuration of the second DRB is used to configure an RLC bearer for the second DRB; and
receiving the downlink data of the first QoS flow from the first network device by using the RLC bearer for the second DRB.

25. A data transmission method, comprising:
sending second configuration information to a first network device, wherein the second configuration information is used to configure a second data radio bearer DRB, and the second DRB is used by a second network device to send downlink data of a first quality of service QoS flow to a terminal device.

26. The method according to claim 25, wherein uplink data of the first QoS flow is carried on a first DRB, and the first DRB is configured by using first configuration information.

27. The method according to claim 25 or 26, wherein before the second configuration information is sent to the first network device, the first DRB is further used to carry the downlink data of the first QoS flow.

28. The method according to claim 27, wherein before sending the second configuration information to the first network device, the method further comprises:
receiving a first request message from the first network device, wherein the first request message is used to request the second network device to transmit the downlink data of the first QoS flow for the terminal device, and the first request message comprises information about the first QoS flow.

29. The method according to claim 27, wherein before sending the second configuration information to the first network device, the method further comprises:
receiving a second request message from the first network device, wherein the second request message is used to request the second network device to transmit the first QoS flow for the terminal device, and the second request message comprises information about the first QoS flow.

30. The method according to claim 25 or 26, wherein before the second configuration information is sent to the first network device, the second DRB is used by the first network device to receive the uplink data of the first QoS flow, and is used by the first network device to send the downlink data of the first QoS flow.

31. The method according to claim 30, wherein before sending the second configuration information to the first network device, the method further comprises:
receiving a third request message from the first network device, wherein the third request message is used to request the second network device to transmit the downlink data of the first QoS flow for the terminal device, and the third request message comprises a packet data convergence protocol PDCP configuration of the second DRB and a mapping relationship between the second DRB and the first QoS flow.

32. The method according to claim 30, wherein before sending the second configuration information to the first network device, the method further comprises:
receiving a fourth request message from the first network device, wherein the fourth request message is used to request the second network device to transmit the first QoS flow for the terminal device, and the fourth request message comprises a PDCP configuration of the second DRB and a mapping relationship between the second DRB and the first QoS flow.

33. The method according to any one of claims 28 to 32, wherein sending the second configuration information to the first network device comprises: sending a response message to the first network device, wherein the response message indicates that the second network device transmits the downlink data of the first QoS flow for the terminal device, and the response message comprises the second configuration information.

34. The method according to claim 25 or 26, wherein before the second configuration information is sent to the first network device, the second DRB is used by the first network device to send the downlink data of the first QoS flow.

35. The method according to claim 34, wherein the method further comprises: receiving third indication information from the first network device, wherein the third indication information indicates the second network device to send the downlink data of the first QoS flow to the terminal device by using the second DRB.

36. The method according to any one of claims 25 to 35, wherein the method further comprises:
receiving the downlink data of the first QoS flow from a core network element through a second tunnel; and
sending the downlink data of the first QoS flow to the terminal device by using the second DRB.

37. The method according to any one of claims 25 to 36, wherein the method further comprises:
establishing the second tunnel, wherein the second tunnel is used by the second network device to receive the downlink data of the first QoS flow from the core network element.

38. The method according to any one of claims 25 to 37, wherein the method further comprises:
sending first indication information to the second network device, wherein the first indication information indicates the first network device to establish a radio link control RLC bearer for the second DRB.

39. The method according to any one of claims 25 to 38, wherein the method further comprises:
receiving, from the first network device, endpoint information that indicates a third tunnel, wherein the third tunnel is used by the first network device to receive the downlink data of the first QoS flow from the second network device.

40. The method according to any one of claims 37 to 39, wherein before establishing the second tunnel, the method further comprises:
receiving second indication information from the first network device, wherein the second indication information indicates the second network device to establish the second tunnel.

41. A data transmission method, comprising:
receiving endpoint information that indicates a second tunnel, wherein the second tunnel is used by a core network element to send downlink data of a first quality of service QoS flow to a second network device, wherein uplink data of the first QoS flow is received by the core network element from a first network device through a first tunnel.

42. The method according to claim 41, wherein before the endpoint information that indicates the second tunnel is received, the downlink data of the first QoS flow is sent by the core network element to the first network device through the first tunnel.

43. The method according to claim 41 or 42, wherein the method further comprises:
receiving a message that indicates to retain the first tunnel.

44. A data transmission apparatus, comprising a module or unit configured to implement the method according to any one of claims 1 to 18, or a module or unit configured to implement the method according to any one of claims 19 to 24, or a module or unit configured to implement the method according to any one of claims 25 to 40, or a module or unit configured to implement the method according to any one of claims 41 to 43.

45. A data transmission apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 43.

46. A chip, comprising a communication interface, wherein the communication interface is configured to receive data and/or information, and transmit the received data and/or information to a processor, and the processor processes the data and/or the information to perform the method according to any one of claims 1 to 43.

47. A computer-readable storage medium, storing computer program code or instructions, and the computer program code or instructions are used to implement the method according to any one of claims 1 to 43.

48. A computer program product, wherein the computer program product comprises computer program code or instructions, and when the computer program code or the instructions are run by a data transmission apparatus, the data transmission apparatus is enabled to perform the method according to any one of claims 1 to 43.

49. A communication system, comprising a first network device, wherein the first network device is configured to perform the method according to any one of claims 1 to 18.

50. The communication system according to claim 49, wherein the communication system further comprises at least one of a terminal device, a second network device, or a core network element, wherein the terminal device is configured to perform the method according to any one of claims 19 to 24, the second network device is configured to perform the method according to any one of claims 25 to 40, and the core network element is configured to perform the method according to any one of claims 41 to 43.
